# EUROPEAN PATENT SPECIFICATION

(11) **EP 2 870 955 B1**
(45) Date of publication and mention of the grant of the patent: **14.06.2017**
(21) Application number: 13816858.8
(22) Date of filing: 05.07.2013
(51) Int. Cl.: B65B 35/24, B65B 35/44, B65B 57/00, B65B 57/18, B65B 59/04, B65G 17/14, B65G 17/36

(54) **MANUAL DRUG DISPENSER DEVICE**
VORRICHTUNG FÜR MANUELLE ARZNEIMITTELABGABE
DISPOSITIF MANUEL DE DISTRIBUTION DE MÉDICAMENT

(30) Priority: 07.07.2012 JP 2012153143
(43) Date of publication of application: 13.05.2015
(73) Proprietor: Tosho, Inc., Tokyo 144-0033 (JP)
(72) Inventor: OMURA, Yoshihito, Tokyo 144-0033 (JP)
(74) Representative: Vossius & Partner Patentanwälte Rechtsanwälte mbB
(86) International application number: PCT/JP2013/004195
(87) International publication number: WO 2014/010216

(56) References cited:
- JP-A- 2000 203 708
- JP-A- 2003 095 421
- JP-A- 2004 010 306
- JP-A- 2010 005 225
- JP-A- 2010 037 018
- JP-U- 3 173 953

## Description

### Technical Field

The present invention relates to a manual drug dispenser device including a preliminary dispensing cassette, formed by disposing a plurality of boxes side by side in a lattice, and a conveyor, which receives drugs from the preliminary dispensing cassette. More particularly, the present invention relates to a manual drug dispenser device whose conveyor includes a first conveyor and a second conveyor, with the first conveyor including compartments disposed in a lattice and the second conveyor including compartments disposed in a column.

### Background Art

### [Past Manual Drug Dispenser Devices]

Manual drug dispenser devices having the following structure are being put into practical use as manual drug dispenser devices used by being installed in a drug dividing and packing machine, such as a tablet dividing and packing machine, which automatically divides and packs drugs, such as tablets, on the basis of prescription data or dispensing data derived therefrom (refer to, for example, PTL 1 and PTL 2) :
- Preliminary dispensing cassette which includes a plurality of boxes disposed side by side in a lattice and which is capable of being drawn out from a housing
- Multi-column conveyor which includes a plurality of compartments disposed side by side in a lattice, the number columns of compartments being larger than that in the preliminary dispensing cassette, which is provided in the housing, and which receives the drugs all at once from the preliminary dispensing cassette (hereunder referred to as "first conveyor")
- Single-column conveyor which includes a plurality of compartments disposed side by side in a column, the number of compartments being larger than the number of rows in the first conveyor, which is provided in the housing, and which receives the drugs for one column at a time from the first conveyor (hereunder referred to as "second conveyor")

A specific structure of the manual drug dispenser device is described to the extent that is useful for describing the present invention while citing the drawings.

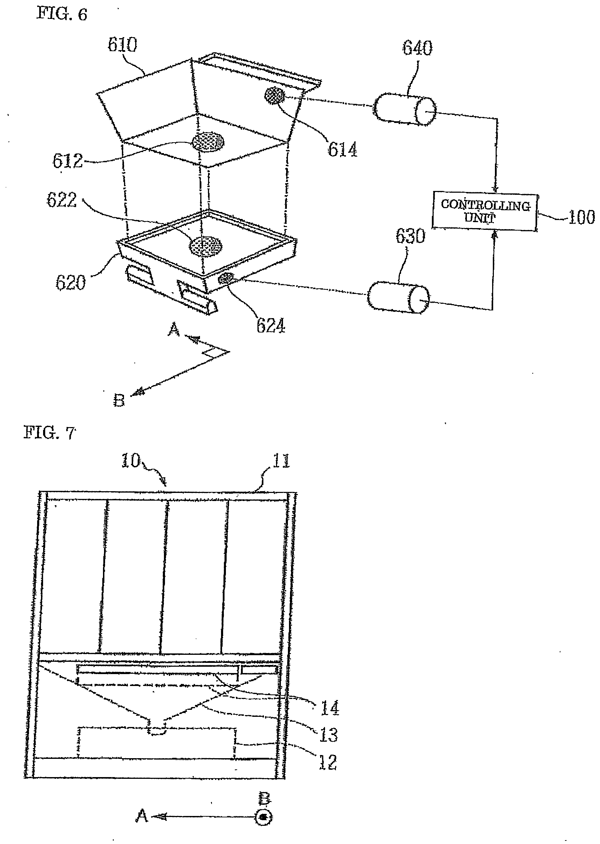

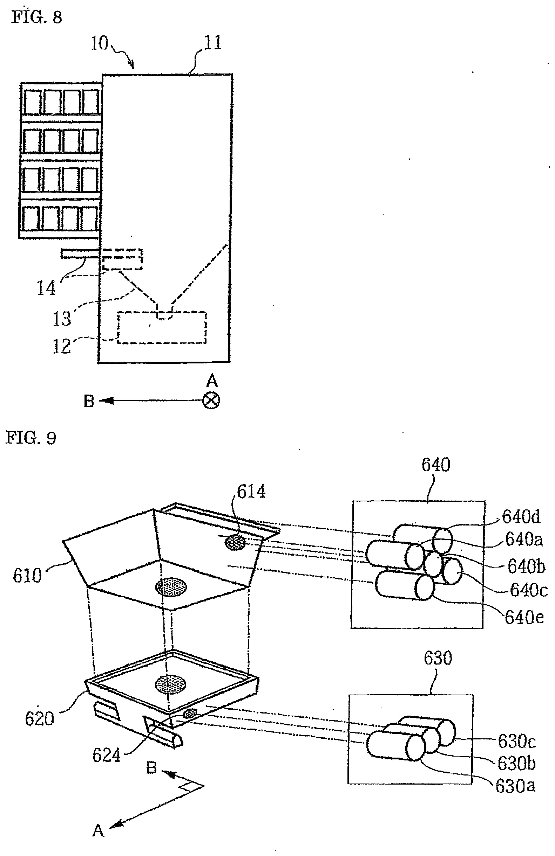

A manual drug dispenser device 14 is internally provided in a middle portion of a housing of a drug dividing and packing machine 10 shown in, for example, Figs. 7 and 8. When performing a manual dispensing operation, a required portion is drawn out from a front face of the housing 11, and, after the manual dispensing operation, the required portion is accommodated in the housing 11 by a push-back operation or a switch operation. In the accommodated state in the housing 11, the manual drug dispenser device 14 successively discharges the drugs to a hopper 13 in response to a dividing and packing operation of the drug dividing and packing machine 10.

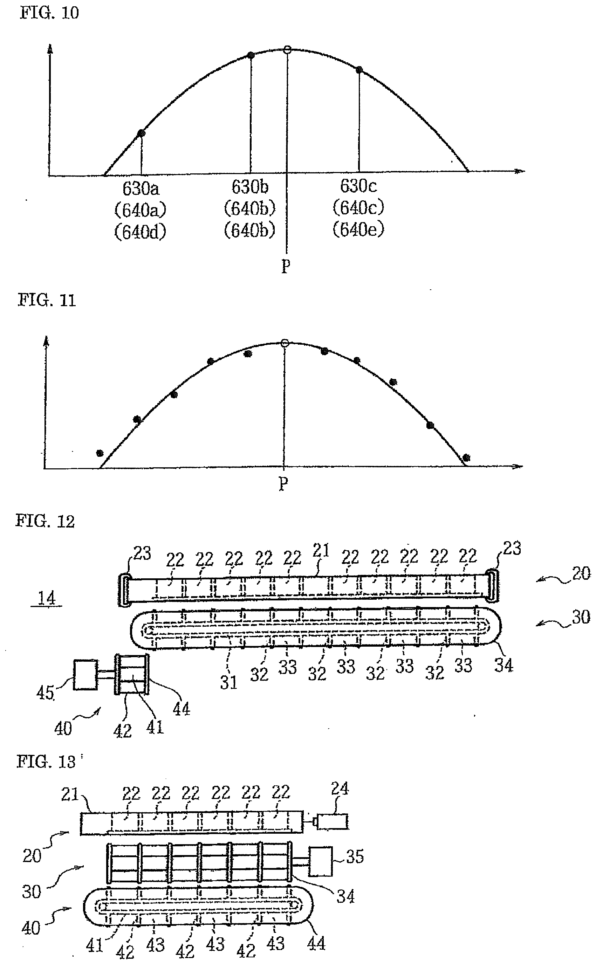

As shown in Figs. 12 to 14, the manual drug dispenser device 14 includes an upper-portion preliminary dispensing cassette 20, a middle-portion first conveyor 30, and a lower-portion second conveyor 40.

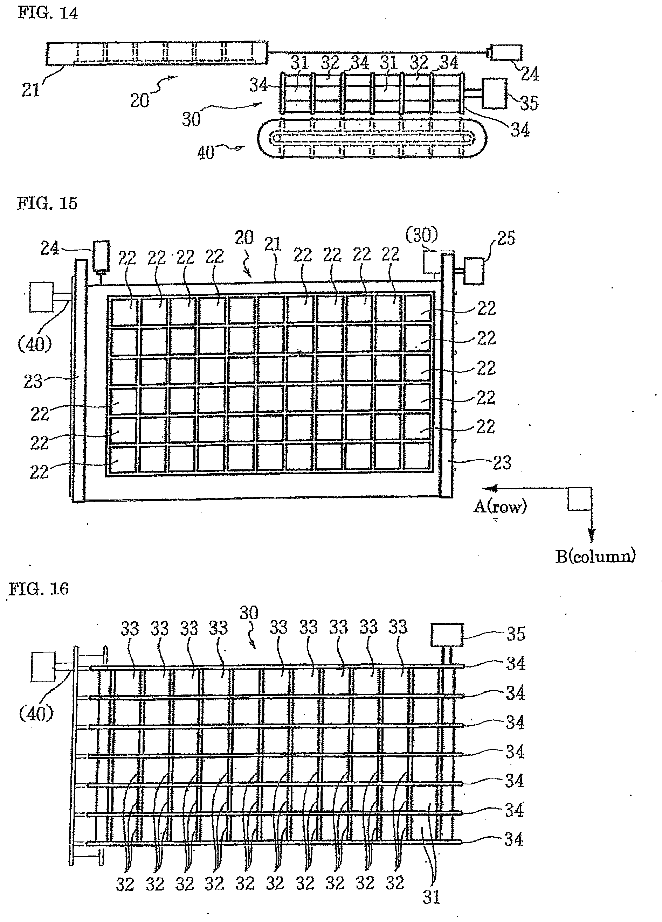

As shown in Fig. 15, the preliminary dispensing cassette 20 includes a cassette frame 21, boxes 22, a drawing-out member 23, a shutter operation member 24, and a motor 25. The cassette frame 21 is supported so as to be slidable towards a lower side in Fig. 15 and towards a near side in Fig. 12 by the drawing-out member 23. As shown in Fig. 14, the cassette frame 21 can be forwardly drawn out from an opening of a front panel of the housing 11. The cassette frame 21 moves into and out of the housing 11 using the motor 25 that operates in accordance with a switch operation (not shown). The plurality of boxes 22 each have an open top for putting in a drug and are each provided with a single-swinging or a double-swinging shutter at a bottom portion thereof. All of the boxes 22 can be opened or closed at the same time by the shutter operation member 24 shown in Figs. 13 to 15. The boxes 22 are mounted on the cassette frame 21 while being disposed side by side in a lattice, for example, in 6 rows in a front-back direction and in 11 columns in a left-right direction as shown in Fig. 15.

The first conveyor 30 is positioned directly below the accommodated preliminary dispensing cassette 20 and is built in the housing 11. As shown in Fig. 16, the first conveyor 30 includes endless belts (hereunder referred to as "belts") 31, movable plates 32, compartments 33, stationary plates 34, and a motor 35. The compartments 33 are partitioned at left and right columns by the movable plates 32 serving as dividing plates, and are partitioned at front and back rows by the stationary plates 34 serving as partition plates or side plates. The area occupied by each compartment 33 is substantially the same as the area occupied by each box 22. The belts 31 having wide widths are provided at bottom sides of the compartments 33. The belts 31 are formed of a material selected from, for example, flexible and elastic synthetic rubber or flexible plastic. The belts 31 are provided in a tensioned state around long left and right support shafts, and are circulated by the operation of the motor 35.

The stationary plates 34 are separated from the belts 31, and fixed. The movable plates 32 are formed from small plate members formed of the same material as the belts 31. The movable plates 32 are provided so as to stand at outer peripheral surfaces of the belts 31. The movable plates 32 move in the left-right direction in accordance with the belts 31. In order for the compartments 33 of the first conveyor 30 to receive drugs all at once from the preliminary dispensing cassette 20, the number of rows and columns of the compartments 33 are set as follows. That is, the number of rows of the compartments 33 is the same as the number of rows of the boxes 22, whereas the number of columns of the compartments 33 is greater than or equal to the number of columns of the boxes 22 at least at an upper portion of the belts 31. Accordingly, the compartments 33 are disposed in a plurality of columns, the number of which is larger than the number of columns of the boxes 22.

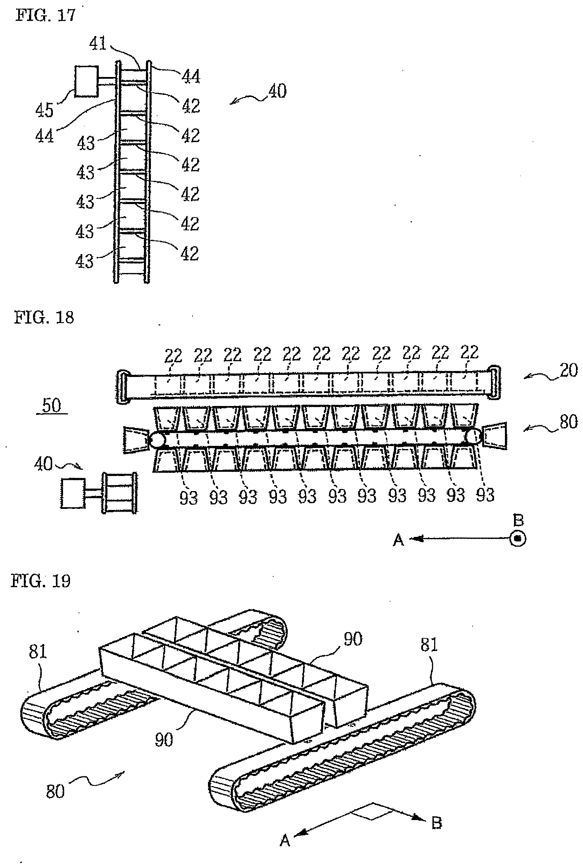

The second conveyor 40 is positioned at one end of the first conveyor 30, for example, directly below a left end of the first conveyor 30 in the example shown in Fig. 16, and is built in the housing 11. As shown in Fig. 17, the second conveyor 40 includes a belt 41, movable plates 42, compartments 43, stationary plates 44, and a motor 45. The compartments 43 are partitioned at the front and back by the movable plates 42 serving as dividing plates. The stationary plates 44 serving as side plates are provided at the left and right sides of the compartments 43. The area occupied by each compartment 43 is greater than or equal to the area occupied by each compartment 33. The belt 41 having a narrow width is provided at bottom sides of the compartments 43. The belt 41 is formed of the same material as the belts 31. The belt 41 is provided in a tensioned state around short front and back support shafts, and is circulated by the operation of the motor 45.

The stationary plates 44 are separated from the belt 41, and fixed. The movable plates 42 are formed from small plate members formed of the same material as the belt 41. The movable plates 42 are provided so as to stand at outer peripheral surfaces of the belt 41. The movable plates 42 move in the front-back direction in accordance with the belt 41. In order for the compartments 43 of the second conveyor 40 to receive drugs for one column, at the left end, at a time from the first conveyor 30, the compartments 43 are disposed as follows. That is, although the compartments 43 are disposed side by side in one column, the number of compartments 43 is greater than or equal to the number of compartments 33 in each column, that is, to the number of rows of the compartments 33 at least at an upper portion of the belt 41. Accordingly, the compartments 43 are disposed in one column so that the number of compartments 43 is greater than the number of rows of the compartments 33.

Although not illustrated, the following are known in addition to a manual drug dispenser device in which a display unit is mounted on a preliminary dispensing cassette 20, the display unit indicating, for example, double-dispensing characters, the number of boxes to be used, the number of boxes in the vertical and horizontal directions, the positions of the boxes to be used, and an enclosure surrounding the group of boxes (refer to, for example, PTL 1 and PTL 2). These are: a manual drug dispenser device in which an openable-and-closable cover is provided on a top surface of a frame member into which and out of which a preliminary dispensing cassette can be inserted and removed, such that the names of the drugs are displayed in a selectable manner and a dispensing range of the selected drug is lit (refer to, for example, PTL 3); and a manual drug dispenser device in which only a manual dispensing range is lit and only a drug in the manual dispensing range is transferred to a preliminary dispensing cassette, with a compartment through hole for putting drugs therein being formed in a dispensing section at a top surface of a frame member (into which and out of which the preliminary dispensing cassette can be inserted and removed) and with a lighting member being mounted thereat (refer to, for example, PTL 4).

In such a manual drug dispenser device 14, prior to a manual dispensing operation, the preliminary dispensing cassette 20 is drawn out from the housing 11 and, in accordance with a doctor's written instruction or display, drugs are manually dispensed into the boxes 22. After the manually dispensing operation, the preliminary dispensing cassette 20 is moved back into the housing 11. Then, from the accommodated manual drug dispenser device 14, the drugs are transferred to the first conveyor 30 all at once. The drugs that are divided from each other in the boxes 22 fall one at a time into the respective compartments 33 disposed directly below the boxes 22 from the boxes 22. Therefore, the drugs can be transferred with the divided state at the time of manual dispensing operation being maintained.

Next, in response to an automatic dividing and packing operation of the drug dividing and packing machine 10, the drugs in the leading-column compartments among the compartments 33 are transferred to the compartments 43 with the divided state of the drugs being maintained. Further, the drug in the leading compartment among the compartments 43 is put into a packing device 12 via the hopper 13. When the putting operation of the drugs, each in one compartment, is repeated until the second conveyor 40 becomes empty, the drugs for the leading-column compartments are transferred from the first conveyor 30 to the second conveyor 40, and the putting operation of drugs, each in one compartment, is started again. In this way, in accordance with the division of the drugs at the time of the manually dispensing operation, the drugs are supplied from the manual drug dispenser device 14 and are packed by one compartment at a time.

In the manual drug dispenser device 14, as already mentioned above, the belts 31 and the movable plates 32 of the first conveyor 30 and the belt 41 and the movable plates 42 of the second conveyor 40 are each formed of a flexible and elastic material. Therefore, when the drugs fall and are discharged from the compartments 33 and 43 while turning around at conveyor ends, the compartments 33 and 43 are considerably deformed with widened openings. Therefore, the problem that the drugs remain in the compartments 33 and 43 because they do not fall does not occur. Consequently, the drugs can be smoothly and reliable placed and discharged.

However, proper mounting of many movable plates 32 and 42 on the belts 31 and the belt 41 is burdensome and costly to carry out even if these members, which are formed of the same flexible and elastic material, are attached to each other.

In particular, since, in the first conveyor 30 having many compartments 33, the compartments 33 are partitioned by stationary plates 34, the movable plates 32 are divided into many small sections. Therefore, the operation amount is large.

Consequently, a manual drug dispenser device that allows a first conveyor having an improved structure to be easily produced at a low cost is being put into practical use.

### [Recent Manual Drug Dispenser Device 1]

As a manual drug dispenser device whose first conveyor is easily produced and is low in cost, a manual drug dispenser device of a type including a first conveyor that is an improvement over the first conveyor of the above-described manual drug dispenser device is described. The manual drug dispenser device includes a preliminary dispensing cassette, a first conveyor, and a second conveyor. The preliminary dispensing cassette includes a plurality of boxes disposed side by side in a lattice. The first conveyor includes a plurality of compartments disposed side by side in a lattice and receives drugs all at once from the preliminary dispensing cassette, the number of columns of the compartments being larger than that in the preliminary dispensing cassette. The second conveyor includes a plurality of compartments disposed side by side in one column and receives drugs for one column at a time from the first conveyor, the number of compartments being larger than the number of rows in the first conveyor. The first conveyor is such that compartment column members (hereunder referred to as "first receiving members") that are larger in number than the number of columns of the boxes of the preliminary dispensing cassette are mounted on a pair of belts that are disposed parallel to each other and are driven together. In each first receiving member, the compartments for one column of the first conveyor are integrally formed. (Refer to, for example, PTL 5 and PTL 6.)

A specific structure of the manual drug dispenser device is described while citing the drawings.

As shown in Fig. 18, the manual drug dispenser device 50 has the following structure:
- Preliminary dispensing cassette 20 which includes a plurality of boxes 22 disposed side by side in a lattice and which is capable of being drawn out from a housing 11
- First conveyor 80 which includes a plurality of compartments 93 disposed side by side in a lattice, the number columns of the compartments 93 being larger than that in the preliminary dispensing cassette 20, which is provided in the housing 11, and which receives the drugs all at once from the preliminary dispensing cassette 20
- Second conveyor 40 which includes a plurality of compartments 43 disposed side by side in one column, the number of compartments 43 being larger than the number of rows in the first conveyor 80, which is provided in the housing 11, and which receives drugs for one column at a time from the first conveyor 80

Of the preliminary dispensing cassette 20, the first conveyor 80, and the second conveyor 40, the preliminary dispensing cassette 20 and the second conveyor 40 have structures that are the same as the past structures described above. Therefore, the structure of the first conveyor 80 that differs from that of the above-described first conveyor 30 is described in detail.

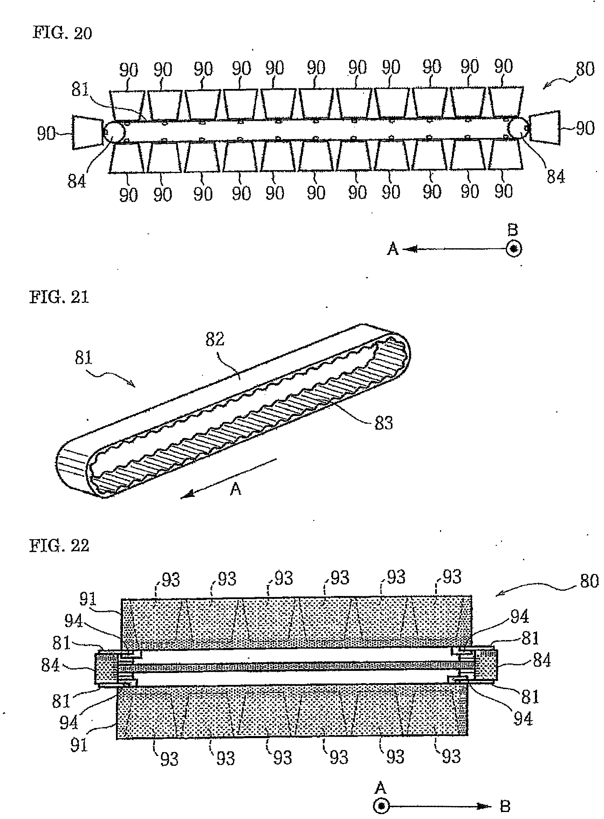

As shown in Fig. 18, in place of the middle-portion first conveyor 30, the first conveyor 80 is disposed directly below the upper-portion preliminary dispensing cassette 20 and obliquely above the lower-portion second conveyor 40. As shown in Fig. 19 or Fig. 20, the first conveyor 80 includes a pair of belts 81, one or more pairs of connecting gears 84, and first receiving members 90. The pair of belts 81 are disposed parallel to each other. The one or more pairs of connecting gears 84 circulate and drive the pair of belts 81 together. The number of first receiving members 90 is 24 in the example shown in Fig. 20, which is larger than the number of columns of boxes 22 of the preliminary dispensing cassette 20, such as 11 columns in the example shown in Fig. 18.

As shown in Fig. 21, each belt 81 is a toothed belt 82 having toothed portions 83 formed in an inner peripheral surface thereof and being narrow in width. The belts 81 are what are called timing belts that are commercially available and formed of flexible materials, such as synthetic rubber. They are low in cost and easily available.

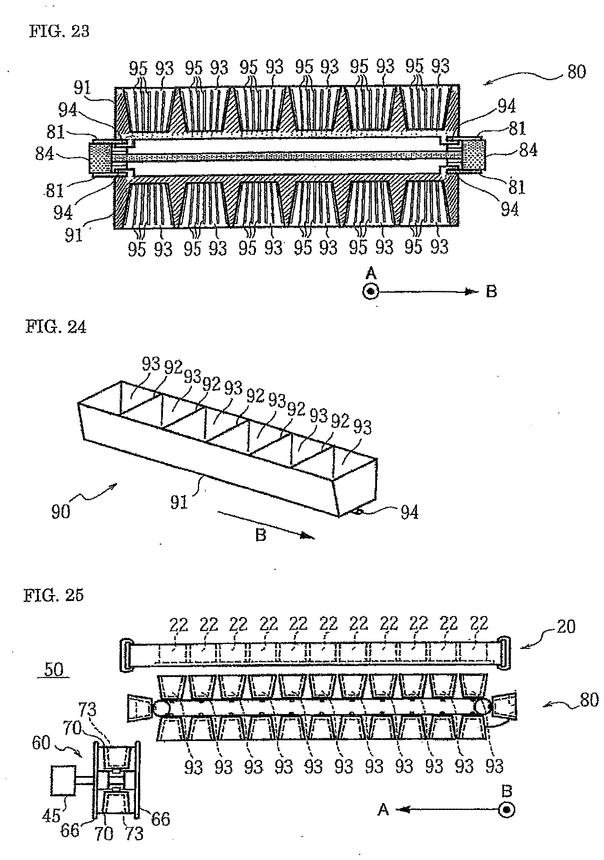

As shown in Figs. 22 and 23, the connecting gears 84 are gears fixed to two ends of a connecting rod. The gears engage with one of the toothed portions 83 of the belts 81 at one end, and the gears engage with the other toothed portions 83 of the belts 81 at the other end. Although, as shown in Figs. 22 and 23, one pair of connecting gears 84 is enough, more than one pair may be used as long as the gears are disposed parallel to each other directly below the preliminary dispensing cassette 20. When more than one pair of connecting gears 84 are provided, any one of the connecting gears 84 is axially rotated and driven by a motor 35, and the other connecting gears 84 are driven via the belts 81.

As shown in Fig. 24, compartments 93 corresponding to the compartments 33 of the first conveyor 30 are formed in the first receiving member 90. One column of compartments 93 includes, for example, six compartments in Fig. 24. The first receiving member 90 is integrally formed by, for example, injection molding of hard plastic or the like. The shape of the first receiving member 90 is formed by disposing partition walls 92 at an equal pitch in an internal space of a long box member 91 having an open top and by disposing the compartments 93 having the same shape in a column. Each compartment 93 has a frustum shape having a wide opening and a narrow inside bottom with inner side surfaces of each compartment 93 having inclinations that increase towards the open side. Although the four inner side surfaces of each compartment 93 are all inclined, two opposing surfaces may be inclined with the remaining two surfaces not being inclined.

As shown in Fig. 23, vertically straight protrusions 95 are formed on the inner side surfaces of the compartments 93 of the first receiving members 90. The protrusions 95 may be formed in the entire areas or parts of the inner side surfaces of the compartments 93. Even if the protrusions 95 are formed in limited areas, it is desirable that the protrusions 95 be formed at the inclined portions of the inner side surfaces. Although the height of the protrusions 95 is typically on the order of from 0.2 to 0.5 mm, it may be other values. The inside bottom portion of the compartment 93 of each first receiving member 90 has a rough surface. It is desirable that these rough surfaces have very small protrusions so as to provide a rough feel. Although the difference between the height of the very small protrusions and the height of the roots is typically on the order of 0.1 mm, it may be other values.

The first receiving members 90 are such that clamping portions 94 are provided at two end portions of a lower surface, a back surface, and an outer surface of a bottom wall, serving as an outer bottom surface. The clamping portions 94 may be formed together with the long box member 91, or may be attached to the long box member 91 afterwards. A base end portion of each clamping portion 94 protrudes from the outer bottom surface of the long box member 91. A middle portion of each clamping portion 94 changes direction in a longitudinal direction of the long box member 91 and is substantially parallel to a bottom surface of the long box member 91. A front end portion of each clamping portion 94 extends to a location that is substantially directly below an end surface of the long box member 91. The middle portion and the front end portion of each clamping portion 94 each have the shape of a straight bar allowing them to easily fit in a root of the toothed portion 83 of the corresponding toothed belt 82. By inserting the toothed belts 82 between the clamping portions 94 and each long box member 91, the belts 81 are clamped so as not to be displaced from the end portions of the first receiving members 90.

By clamping the two belts 81 by the two ends of each first receiving member 90, each first receiving member 90 forms a bridge at the belts 81. Therefore, by placing the first receiving members 90 at an equal interval at the pair of belts 81 that are provided in a tensioned state around the gears 84, the first conveyor 80 is formed.

Partitioning stationary plates 34 shown in Fig. 16 are not required for forming the compartments 93. However, guiding stationary plates, rods, or the like, which are similar to the stationary plates 34, may be provided when necessary for, for example, achieving stable movements. For example, it is possible to, with elongated guide members being disposed parallel to the belts 81 and grooves being formed in upper half portions of the partition walls 92, guide the first receiving members 90 using the guide members in the grooves.

In such a manual drug dispenser device 50, if the first conveyor 50 includes a combination of a pair of belts 81 and a plurality of first receiving members 90, each first receiving member 90 includes integrally formed compartments 93 for one column, each first receiving member 90 is mounted on the pair of belts 81, and the pair of belts are disposed parallel to each other, the main portion of the first conveyor 50 is formed. This makes it possible to, in addition to reducing material costs of the first conveyor, make assembly operations considerably less burdensome.

Although the belts 81 need to be flexible and elastic, the first receiving members 90 need not be formed of flexible and elastic materials. The first receiving members 90, which are hardly deformed when ordinarily used, may be formed of hard materials, such as solid materials including hard plastic. If the first receiving members 90 are formed of such solid materials, the first conveyor 50 is easily assembled.

### [Recent Manual Drug Dispenser Device 2]

As a manual drug dispenser device whose first conveyor is easily produced and is low in cost, a manual drug dispenser device of a type including a second conveyor that is an improvement over the second conveyor of the above-described manual drug dispenser device is described. The second conveyor 40 also includes a plurality of movable plates 42 though not as many as in the first conveyor. Since the mounting operation amount is large, improved second conveyors that can be easily produced at a low cost are also being put into practical use. The manual drug dispenser device includes a preliminary dispensing cassette, a first conveyor, and a second conveyor. The preliminary dispensing cassette includes a plurality of boxes disposed side by side in a lattice. The first conveyor includes a plurality of compartments disposed side by side in a lattice and receives drugs all at once from the preliminary dispensing cassette, the number of columns of the compartments being larger than that in the preliminary dispensing cassette. The second conveyor includes a plurality of compartments disposed side by side in one column and receives drugs for one column at a time from the first conveyor, the number of compartments being larger than the number of rows in the first conveyor. The second conveyor is such that compartment members (hereunder referred to "second receiving members") that are larger in number than the number of rows of the compartments of the first conveyor are swingably mounted on a pair of belts that are disposed parallel to each other and are driven together. In the second receiving member, each compartment of the second conveyor is integrally formed. (Refer to, for example, PTL 7.)

A specific structure of the manual drug dispenser device is described while citing the drawings.

As shown in Fig. 25, the manual drug dispenser device 50 has the following structure:
- Preliminary dispensing cassette 20 which includes a plurality of boxes 22 disposed side by side in a lattice and which is capable of being drawn out from a housing 11
- First conveyor 80 which includes a plurality of compartments 93 disposed side by side in a lattice, the number columns of the compartments 93 being larger than that in the preliminary dispensing cassette 20, which is provided in the housing 11, and which receives the drugs all at once from the preliminary dispensing cassette 20
- Second conveyor 60 which includes a plurality of compartments 73 disposed side by side in one column, the number of compartments 73 being larger than the number of rows in the first conveyor 80, which is provided in the housing 11, and which receives drugs for one column at a time from the first conveyor 80.

Of the preliminary dispensing cassette 20, the first conveyor 80, and the second conveyor 60, the preliminary dispensing cassette 20 has a structure that is the same as the past structure described above, and the first conveyor 80 has a structure that is the same as the recent structure described above. Therefore, the structure of the second conveyor 60 that differs from that of the above-described past second conveyor 40 is described in detail below.

As shown in Fig. 25, in place of the lower-portion second conveyor 40, the second conveyor 60 is disposed directly below an end portion at a drug discharge side positioned on the left side in Fig. 25 at a leading side of the middle-portion first conveyor 80. As shown in Fig. 26 or Fig. 27, the second conveyor 60 includes a circulating conveyor section 61, second receiving members 70, stationary plates 66, and a cover 67. The number of second receiving members 70 is, for example, 14, which is larger than the number of rows of compartments 93 of the first conveyor 80, such as 6 rows. The stationary plates 66, serving as side plates for guiding movement, restrict any displacement of the second receiving members 70. The cover 67, serving as a surround plate, covers an upper portion of each second receiving member 70 that arrives at a drug discharge position.

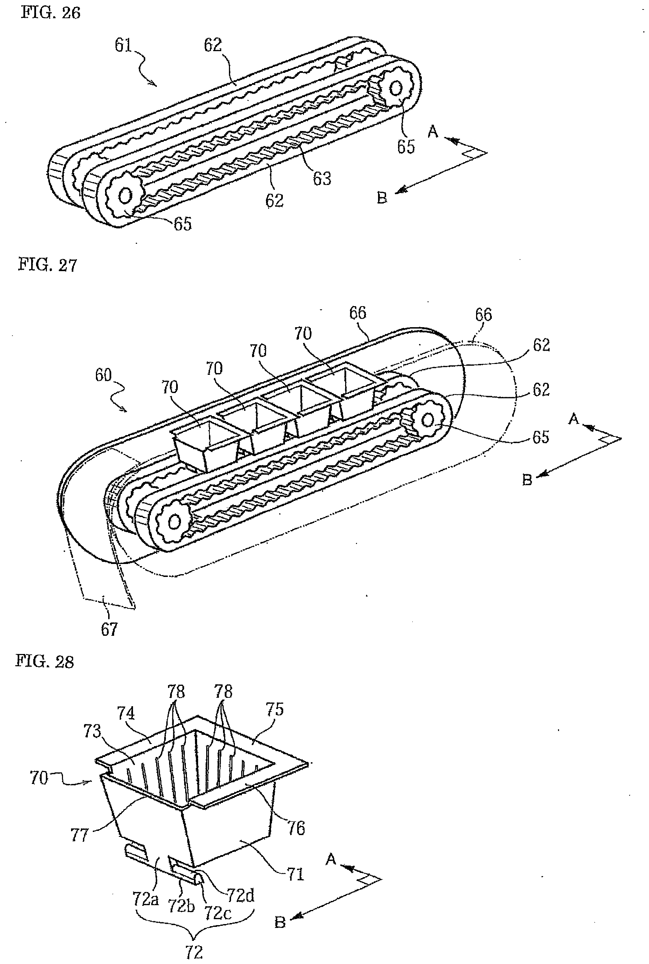

As shown in Fig. 26, the conveyor section 61 includes a pair of belts 62 and one or more pairs of connecting gears 65. The pair of belts 62 are disposed parallel to each other. The one or more pairs of connecting gears 65 circulate and drive the pair of belts 62 together. Each belt 62 is a toothed belt having toothed portions 63 formed in an inner peripheral surface thereof and being narrow in width. The belts 62 are what are called timing belts that are commercially available and formed of flexible materials, such as synthetic rubber. They are low in cost and easily available. The connecting gears 65 are gears whose width is half of that of the belts 62 and that are fixed to two ends of a connecting rod. The gears engage with one of the toothed portions 63 of the belts 62 at one end, and the gears engage with the other toothed portion 63 of the belts 62 at the other end. Although, as shown in Fig. 26, one pair of connecting gears 65 is enough, more than one pair may be used as long as the gears are disposed horizontally and parallel to each other directly below the first conveyor 80. When more than one pair of connecting gears 65 are provided, any one of the connecting gears 65 is axially rotated and driven by a motor 45, and the other connecting gears 65 are driven via the belts 62.

As shown in Fig. 28, the second receiving member 70 is integrally formed by, for example, injection molding of hard plastic or the like, and is a solid object that is not deformed or whose deformation can be ignored when it is ordinarily used. Compartments 73 corresponding to the compartments 43 of the second conveyor 40 are formed in the second receiving members 70. One compartment, that is, one chamber, is integrally formed in each second receiving member 70. Each second receiving member 70 is formed by forming a compartment 73 in an internal space of a box member 71 having an open top. Each compartment 73 has a frustum shape having a wide opening and a narrow inside bottom with inner side surfaces of each compartment 73 having inclinations that increase towards the open side. Although the four inner side surfaces of each compartment 73 are all inclined, two opposing surfaces may be inclined with the remaining two surfaces not being inclined.

Vertically straight protrusions 78 are formed on the inner side surfaces of the compartments 73 of all of the second receiving members 70. The protrusions 78 may be formed in the entire areas or parts of the inner side surfaces of the compartments 73. Even if the protrusions 78 are formed in limited areas, it is desirable that the protrusions 78 be formed at the inclined portions of the inner side surfaces. Although the height of the protrusions 78 is typically on the order of from 0.2 to 0.5 mm, it may be other values. The inside bottom portion of the compartment 73 of each second receiving member 70 has a rough surface. It is desirable that these rough surfaces have very small protrusions so as to provide a rough feel. Although the difference between the height of the very small protrusions and the height of the roots is typically on the order of 0.1 mm, it may be other values.

As shown in Fig. 27, with the second receiving members 70 being in a drug reception state in which the second receiving members 70 are aligned above the belts 62, a back edge 75 shown in Fig. 28 is a projection that projects outwardly at one of two sides of an upper edge portion of the second receiving member 70 that are adjacent to other second receiving members 70, and this back edge 75 reaches a location above a front edge of the adjacent second receiving member 70 at the one of the two sides. As shown in Fig. 28, the second receiving member 70 is provided with a clearance in the form of a cutaway portion at a front edge 77 that is situated at the other of the two sides described above. The clearance at the front edge 77 is provided to prevent interference with the back edge 75 extending from the second receiving member 70 adjacent thereto. Of remaining portions of the upper edge portion of the second receiving member 70,
a left edge 74 and a right edge 76 are projections. However, these projections need not be formed.

Of a bottom portion of each second receiving member 70, a bottom-portion front end, which corresponds to a lower portion of the front edge 77, is provided with a grip portion 72. Each grip portion 72 may be formed together with the box member 71, or may be attached to the box member 71 afterwards. A base end portion 72a of each grip portion 72 projects downward from an outer bottom surface of the box member 71. Each middle portion 72b of each grip portion 72 changes direction in a left-right direction and is in a substantially horizontal state with respect to a bottom surface of the box member 71. Each front edge portion 72c of each grip portion 72 extends to a location that is substantially directly below an end surface of the box member 71. In the illustration, the front edge portions 72c extend in two opposite directions from one base end portion 72a, so that an inverted T shape is formed. However, each grip portion 72 may include two separate portions, such as an L-shaped portion and an inverted L-shaped portion. In either case, the sum of the lengths of the middle portions 72b and the front edge portions 72c of each grip portion 72 is slightly less than half of the width of the belts 62.

Toothed portions 72d at a side of the middle portions 72b and the front edge portions 72c opposing the outer bottom surface of the corresponding second receiving member 70 are formed such that the cross-sectional shape is substantially equivalent to one tooth of the connecting gears 65. The toothed portions 72d have a suitable form that allows them to easily fit in the roots of the toothed portions 63 of the belts 62, which are toothed belts. Therefore, by inserting the roots of the toothed portions 63 between the grip portions 72 and the box members 71, the belts 62 are gripped so as not to be displaced from the second receiving members 70. Here, gaps between the box members 71 and the respective grip portions 72 have sizes that are substantially equal to or slightly narrower than the thickness of the roots of the belts 62. Therefore, the belts 62 are loosely fitted in the gaps between the box members 71 and the respective grip portions 72. In this fitted state, the second receiving members 70 are swingable by a certain amount around the respective grip portions 72 on the basis of the fact that local portions are easily deformable due to the flexibility and elasticity of the belts 62.

By fitting the two belts 62 in the two portions of the grip portion 72 of each second receiving member 70, each second receiving member 70 forms a bridge at the belts 62. Therefore, as shown in Fig. 27, by placing the plurality of second receiving members 70 at an equal pitch on the pair of belts 62 that are provided in a tensioned state around the pair of connecting gears 65, the second conveyor 60 is formed. At the same time that the second conveyor 60 is formed, as shown in Fig. 25, a column of second receiving members 70 in the second conveyor 60 are disposed. At this time, when the connecting gears 65 support the outer half of the widths of the belts 62, and the grip portions 72 of the second receiving members 70 are placed on less than the inner half of the widths of the belts 62, interference between the grip portions 72 of the second receiving members 70 and the connecting gears 65 are properly prevented.

As shown in Fig. 27, the cover 67 is formed by, for example, bending a rectangular metallic plate at a constant curvature or with a changing curvature, and is set at a drug-discharge side end portion of the two end portions of the second conveyor 60. The cover 67 is disposed so as to contact the back edge 75 of the second receiving member 70 that has arrived at the aforementioned drug discharge position. The cover 67 contacts the back edge 75 only during an early swing period of the second receiving member 70 with the swing amount being smaller than that when the second receiving member 70 swings freely. The curvature and the setting position of the cover 67 are adjusted so that, during a late swing period of the second receiving member 70, the second receiving member 70 separates from the cover 67 and swings freely. Of the portion of the cover 67 that contacts the back edge 75, a final contact portion (which is where the back edge 75 contacts just before the back edge 75 separates from the cover 67) is provided with an uneven portion (not shown). The uneven portion is a member having a surface provided with, for example, several protrusions that are 1 mm high, and is provided at the cover 67.

In such a manual drug dispenser device 50, the second conveyor 60 includes a combination of a pair of belts 62 and a plurality of second receiving members 70, with each second receiving member 70 having one integrally formed compartment 73. When the second receiving members 70 are mounted on the pair of belts 62, and the pair of belts 62 are disposed parallel to each other, the main portion of the second conveyor 60 is formed. This makes it possible to, in addition to reducing material costs of the second conveyor 60, make assembly operations less burdensome.

In the second conveyor 60, the second receiving members 70 that define the compartments 73 are swingably mounted on the pair of belts 62. By this, at conveyor ends where the direction of movement is changed from horizontal to vertical along with the belts 62, the second receiving members 70 swing by a larger amount than the belts 62 bend in a short time, and the drugs are strongly ejected by the power thereof. Therefore, drugs are smoothly discharged.

When the second conveyor 60 receives drugs for one column from the first conveyor 80, in order to receive the drugs with the divided state being maintained, the second receiving members, the number of which is larger than or equal to the number of receiving members in one column in the first conveyor 80, are aligned in a substantially straight line for receiving the drugs. A gap cannot be seen at a location between adjacent second receiving members 70 in this state when viewed vertically. That is, even if the second receiving members 70 and the belts 62 are separately formed, when receiving the drugs, they are provided consecutively like an integrated/continuous member without gaps. This is because the back edge 75 of one second receiving member 70 extends above the front edge 77 of another second receiving member 70. In this way, without wasting the space between the second receiving members 70, the compartments 73 are provided in the entire space at the upper sides of the second receiving members 70 prepared to receive drugs, and receiving openings of the compartments 73 are maximally widened for a predetermined pitch. Therefore, even if the second receiving members 70 and the belts 62 are separately formed, a high drug receiving capability is maintained.

In the second conveyor 60, the second receiving members 70 are easily mounted on the belts 62 by fitting operations. In addition, when the edges of the belts 62 contact the base end portions 72a of the grip portions 72 during the fitting operations, the positions of the belts 62 relative to the positions of the second receiving members 70 are determined. Therefore, the assembly of the second conveyor 60 is properly completed as such fitting operations are performed. The contact between the belts 72 and the respective end portions 72a causes variations in the positions of the belts 62 in directions in which the distance between the pair of belts 62 become shorter to be properly regulated. In addition, when the grip portions 72 are loosely fitted to the belts 62 during the mounting of the grip portions 72 on the belts 62, combined with the fact that the bottom-portion front ends of the second receiving members 70 are provided with the grip portions 72, an allowable swing mode of the second receiving members 70 is simplified when the second receiving members 70 are mounted. The bottom-portion front end of each second receiving member 70 becomes a swing center. By setting the bottom-portion front end of each second receiving member 70 as a swing center, when swinging each second receiving member 70 at the drug discharge position of the conveyor ends, the box member of each second receiving member 70 swings by a large amount so as to be slightly raised. Therefore, drug discharge capability is increased.

In the second conveyor 60, not only is undesired flying of discharge drugs prevented, but also, since the back edges of the second receiving members 70 are caused to contact the cover by making use of the cover 67, the swinging of the second receiving members 70 is restricted in the early period and progresses all at once after the contact ends, so that drug discharge capability is increased. Further, since the cover 67 is provided with an uneven portion or protrusions, prior to the increase of the swinging of the second receiving members 70, the second receiving members 70 are subjected to vibration or shock, and adhesion of the drugs to or catching of the drugs by the compartments 73 are eliminated. Therefore, drug discharge capability is further increased.

When the compartments 73 are formed with a frustum shape to make it difficult for the drugs to become caught by the inner surfaces of the compartments 73; when inner side surfaces of the compartments 73 are provided with vertically straight protrusions or an inside bottom of the compartments 73 is formed with a rough surface to reduce contact area and make it difficult for drugs to adhere to inner surfaces of the compartments 73; or when any of these are realized in combination, the drugs reliably fall out of the compartments 73 without remaining therein if the second receiving members 70 are tilted or are reversed.

### Citation List

### Patent Literature

PTL 1: Japanese Unexamined Patent Application Publication No. 3-240602
PTL 2: Japanese Unexamined Patent Application Publication No. 3-240604
PTL 3: Japanese Unexamined Patent Application Publication No. 2007-209600
PTL 4: Japanese Unexamined Patent Application Publication No. 2007-297066
PTL 5: Japanese Unexamined Patent Application Publication No. 2010-005225
PTL 6: Japanese Unexamined Patent Application Publication No. 2010-011986
PTL 7: Japanese Unexamined Patent Application Publication No. 2010-013145

### Summary of Invention

### Technical Problem

In such existing manual drug dispenser devices (refer to, for example, PTL 5 to 7), in place of the first conveyor 30 or the second conveyor 40 produced by mounting a many movable plates on belts, a first conveyor 80 including integrally formed first receiving members 90 mounted on belts 81 or a second conveyor 60 including integrally formed second receiving members 70 swingably mounted on belts 62 is provided. This makes it possible for manual drug dispenser devices to be easily produced at a low cost.

Manual drug dispenser devices which allow a preliminary dispensing cassette 20 that can be drawn out from a housing to be removed from a frame member and to be moved into and out of the frame member (refer to, for example, PTL 3 and PTL 4) is capable of previously manually dispensing drugs for up to a certain number of future uses. In addition, by making the cassette removable, it is possible to easily perform a cleaning operation in which, for example, any adhered drug powder is removed from the cassette.

Therefore, the first conveyor 80 or the second conveyor 60 may be improved to a type in which the first receiving members 90 or the second receiving members 70 is removable from the belts 81 or the belts 62 so as to provide not only production-related advantages but also advantages related to cleaning operations required after the production of the first conveyor 80 or the second conveyor 60 is completed and is put into practical use.

Moreover, in making such an improvement, when, for example, considering ease of mounting and removal operations and possibility of selection of portions to be cleaned, it is desirable that the first receiving members 90 or the second receiving members 70 are individually mountable and removable without mutually connecting adjacent first receiving members 90 or adjacent second receiving members 70 with each other.

However, the number of first receiving members 90 and the number of second receiving members 70 are large, and mounting and removal operations accompanying, for example, cleaning operations are often performed by persons, such as pharmacists, who are not used to machines, instead of experienced persons, such as manufacturing workers. Therefore, merely making the first receiving members 90 or the second receiving members 70 mountable and removable does make it easier for the cleaning operations to be performed, but the accompanying mounting and removal operations, in particular, the mounting operations, need to be carefully performed so that improper mounting operations are not performed; and the completed mounting operations need to be carefully checked that they have not been improperly performed. Therefore, it cannot be said that the burden on a worker is sufficiently reduced.

Consequently, it is a technological object to provide a manual drug dispenser device in which mounting operations are rarely improperly performed even if first receiving members and second receiving members are mountable and removable.

### Solution to Problem

As first solving means, a manual drug dispenser device according to the present invention is conceived for achieving such an object with regard to the first conveyor. The manual drug dispenser device includes a cassette including a plurality of boxes, the boxes being disposed side by side in a row along a first direction and the boxes being disposed side by side in a column along a second direction crossing the first direction; a first conveyor that receives drugs all at once from the cassette and that conveys the drugs in a first conveying direction along the first direction; and a second conveyor that receives the drugs from the first conveyor and that conveys the drugs in a second conveying direction along the second direction. The first conveyor includes first receiving members, an endless first belt, and a plurality of first mounting members, the first receiving members including a plurality of first compartments provided in a column along the second direction for receiving the drugs from the boxes for one column, the first belt conveying the first receiving members in the first conveying direction, the number of first mounting members being larger than the number of columns of the boxes along the first direction, the plurality of first mounting members allowing the plurality of first receiving members to be removably mounted on the first belt. The manual drug dispenser device further includes a first receiving member detecting unit that is provided so as to face a movement path of each first receiving member, the first receiving member detecting unit detecting each first receiving member; a first mounting member detecting unit that is provided so as to face a movement path of each first mounting member, the first mounting member detecting unit detecting each first mounting member; and a first determining unit that determines whether or not the first receiving members are mounted on the first mounting members on the basis of a detection result provided by the first receiving member detecting unit and a detection result provided by the first mounting member detecting unit.

As second solving means, a manual drug dispenser device according to the present invention is conceived for achieving such an object with regard to a second conveyor. The manual drug dispenser device includes a cassette including a plurality of boxes, the boxes being disposed side by side in a row along a first direction and the boxes being disposed side by side in a column along a second direction crossing the first direction; a first conveyor that receives drugs all at once from the cassette and that conveys the drugs in a first conveying direction along the first direction; and a second conveyor that receives the drugs from the first conveyor and that conveys the drugs in a second conveying direction along the second direction. The second conveyor includes a plurality of second receiving members, an endless second belt, and a plurality of second mounting members, the plurality of second receiving members including a plurality of second compartments provided in a column along the second direction for receiving the drugs from the plurality of first compartments for one column, the second belt conveying the plurality of second receiving members in the second conveying direction, the number of second mounting members being larger than the number of first compartments for one column along the second direction, the plurality of second mounting members allowing the plurality of second receiving members to be removably mounted on the second belt. The manual drug dispenser device further includes a second receiving member detecting unit that is provided so as to face a movement path of each second receiving member, the second receiving member detecting unit detecting each second receiving member; a second mounting member detecting unit that is provided so as to face a movement path of each second mounting member, the second mounting member detecting unit detecting each second mounting member; and a second determining unit that determines whether or not the second receiving members are mounted on the second mounting members on the basis of a detection result provided by the second receiving member detecting unit and a detection result provided by the second mounting member detecting unit.

Further, as third solving means, this manual drug dispenser device according to the present invention is based on the manual drug dispenser device of the first solving means, wherein the first receiving member detecting unit is capable of detecting a position of each first receiving member in the first conveying direction and/or the second conveying direction, wherein the first mounting member detecting unit is capable of detecting a position of each first mounting member in the first conveying direction, and wherein the manual drug dispenser device includes a third determining unit that determines whether or not the first receiving members are properly mounted on the first mounting members on the basis of the detection result provided by the first receiving member detecting unit and the detection result provided by the first mounting member detecting unit.

Further, as fourth solving means, this manual drug dispenser device according to the present invention is based on the manual drug dispenser device of the second solving means, wherein the second receiving member detecting unit is capable of detecting a position of each second receiving member in the second conveying direction and/or the first conveying direction, wherein the second mounting member detecting unit is capable of detecting a position of each second mounting member in the second conveying direction, and wherein the manual drug dispenser device includes a fourth determining unit that determines whether or not the second receiving members are properly mounted on the second mounting members on the basis of the detection result provided by the second receiving member detecting unit and the detection result provided by the second mounting member detecting unit.

### Advantageous Effects of Invention

In such manual drug dispenser devices, according to the first and second solving means, the first receiving members are mountable on and removable from the first mounting members, and the second receiving members are mountable on and removable from the second mounting members. In such a mountable and removable state, in order to prevent omission of mounting of any of the first receiving members and the second receiving members, which are mounted on and removed from the first mounting members and the second mounting members, respectively, when cleaning the first compartments and the second compartments, respectively, a detection is made as to whether or not the first receiving members and the second receiving members have been mounted on the first mounting members and the second mounting members, respectively. In detecting whether or not the mounting has been performed, not only is the first receiving members and the second receiving members detected, but also the first mounting members and the second mounting members that are not mounted on and removed from the belt when merely cleaning the first compartments and the second compartments are separately detected during, for example, repair. On the basis of the result of detection regarding the first receiving members and the second receiving members and the result of detection regarding the first mounting members and the second mounting members, a determination is made as to whether or not the first receiving members and the second receiving members are mounted.

In this way, whether or not mounting/removing members, such as the first receiving member and the second receiving member, are mounted is determined not only by merely detecting whether or not the mounting/removing members exist, but also by considering detection of whether or not holding members, such as the first mounting members and the second mounting members on which mounting operations are performed, exist in addition to the detection of whether or not the mounting/removing members exist. This makes it possible to, for example, determine that the first receiving members and the second receiving members are mounted only when the mounting/removing members are also detected when the holding members are detected; and either ignore whether or not they are mounted or determine that they are not mounted in other cases. Therefore, the possibility of erroneous determinations is almost zero, so that any omission of mounting operations of the mounting/removing members is properly detected.

Consequently, according to the invention, it is possible to realize a manual drug dispenser device in which mounting operations are rarely omitted even if the first receiving members and the second receiving members are mountable and removable.

In the manual drug dispenser devices according to the present invention, according to the third and fourth solving means, not only is it possible to detect whether or not the mounting/removing members and the holding members, such as the first mounting members and the second mounting members on which mounting operations are performed, exist, but also their positions when they are moving or when they are stopped are detectable. On the basis of the results of detections of the positions of the mounting/removing members and holding members, such as whether or not the positions of the mounting/removing members and the holding members relative to each other are within a proper range, not only is a determination made as to whether or not the mounting/removing members and the holding members are mounted, but also a determination is made as to whether or not the mounting/removing members and the holding members are properly mounted.

Therefore, according to the present invention, it is possible to achieve a manual drug dispenser device in which mounting operations are rarely omitted and in which mounting operations are rarely improperly performed even if the first receiving members and second receiving members are mountable and removable.

### Brief Description of Drawings

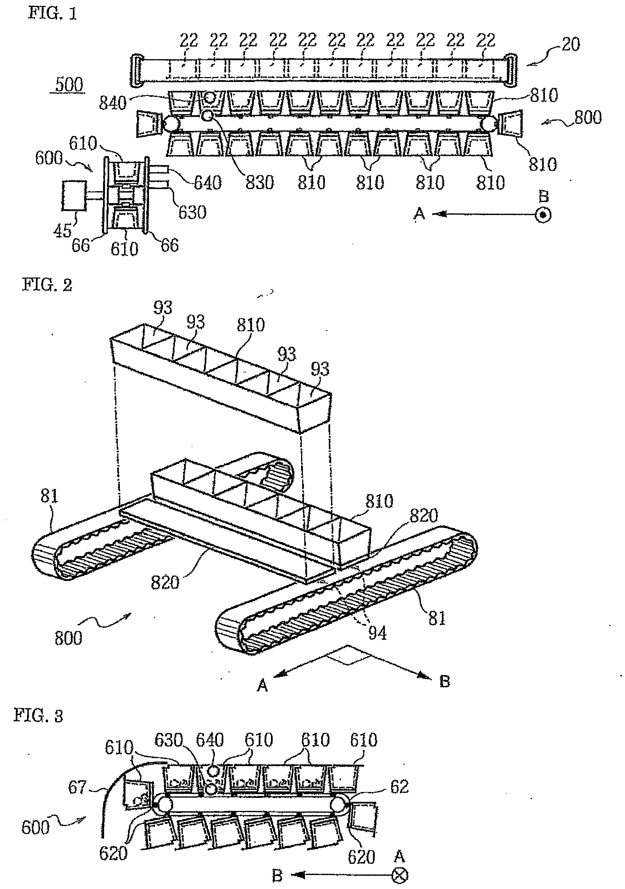

[Fig. 1] Fig. 1 is a front view of a manual drug dispenser device according to a first embodiment of the invention of the present application.
[Fig. 2] Fig. 2 is a perspective view of the main portion of a first conveyor of the manual drug dispenser device shown in Fig. 1.
[Fig. 3] Fig. 3 is a right side view of the main portion of a second conveyor of the manual drug dispenser device shown in Fig. 1.

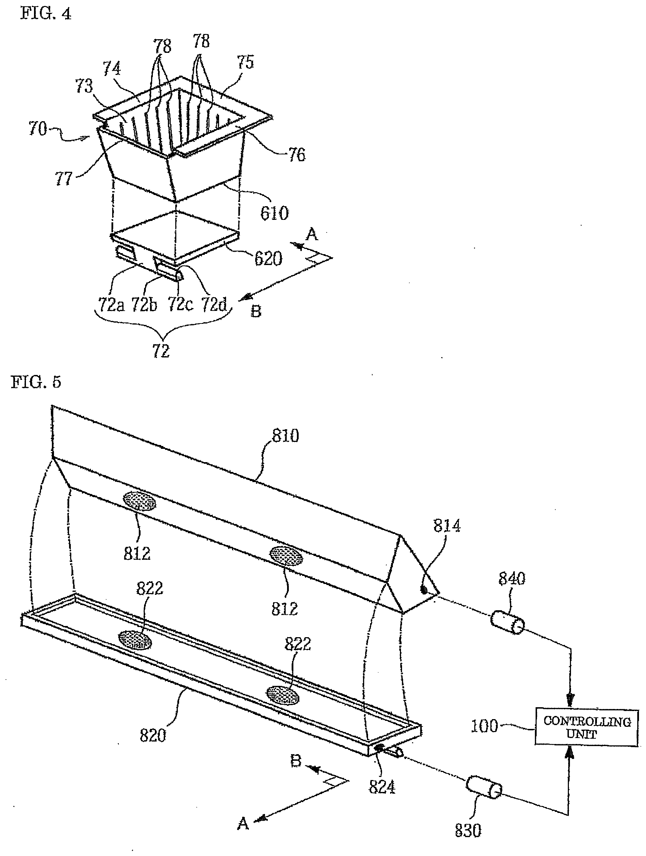

[Fig. 4] Fig. 4 is a perspective view of a second receiving member and a second mounting member of the second conveyor shown in Fig. 3.
[Fig. 5] Fig. 5 is a perspective view of a first receiving member, a first mounting member, a first receiving member detecting unit, and a first mounting member detecting unit of the first conveyor shown in Fig. 2.
[Fig. 6] Fig. 6 is a perspective view of the second receiving member, the second mounting member, a second receiving member detecting unit, and a second mounting member detecting unit of the second conveyor shown in Fig. 3.
[Fig. 7] Fig. 7 is a front view of a drug dividing and packing machine including the manual drug dispenser device shown in Fig. 1.
[Fig. 8] Fig. 8 is a right side view of the drug dividing and packing machine shown in Fig. 7.
[Fig. 9] Fig. 9 is a development perspective view of a second receiving member, a second mounting member, a second receiving member detecting unit, and a second mounting member detecting unit, which are main portions of a manual drug dispenser device according to a second embodiment of the invention of the present application.
[Fig. 10] Fig. 10 shows a graph for describing a position detection method in the manual drug dispenser device shown in Fig. 9.
[Fig. 11] Fig. 11 is a graph for describing a different position detection method in the manual drug dispenser device shown in Fig. 9.
[Fig. 12] Fig. 12 is a front view of a past manual drug dispenser device.
[Fig. 13] Fig. 13 is a right side view of an accommodated state a preliminary dispensing cassette of the manual drug dispenser device shown in Fig. 12.
[Fig. 14] Fig. 14 is a right side view of a drawn-out state of the preliminary dispensing cassette of the manual drug dispenser device shown in Fig. 12.
[Fig. 15] Fig. 15 is a plan view of the manual drug dispenser device with the cassette being accommodated.
[Fig. 16] Fig. 16 is a plan view of an existing multi-column conveyor and an existing single-column conveyor without the cassette.
[Fig. 17] Fig. 17 is a plan view of the existing single-column conveyor without the cassette and the multi-column conveyor.
[Fig. 18] Fig. 18 is a front view of an existing manual drug dispenser device whose multi-column conveyor is improved.
[Fig. 19] Fig. 19 is a perspective view of the main portion of the multi-column conveyor of the manual drug dispenser device shown in Fig. 18.
[Fig. 20] Fig. 20 is a front view of the multi-column conveyor of the manual drug dispenser device shown in Fig. 18.
[Fig. 21] Fig. 21 is a perspective view of an endless belt of the multi-column conveyor shown in Fig. 19.
[Fig. 22] Fig. 22 is a right side view of the existing multi-column conveyor that is vertically cut so as to avoid compartment column members.
[Fig. 23] Fig. 23 is a right side view of the existing multiple-column conveyor that is vertically cut around compartment column members.
[Fig. 24] Fig. 24 is a perspective view of a compartment column member of the manual drug dispenser device shown in Fig. 18.
[Fig. 25] Fig. 25 is a front view of an existing manual drug dispenser device whose single-column conveyor is improved.
[Fig. 26] Fig. 26 is a perspective view of endless belts of the single-column conveyor shown in Fig. 25.
[Fig. 27] Fig. 27 is a perspective view of the main portion of the single-column conveyor shown in Fig. 25.
[Fig. 28] Fig. 28 is a perspective view of a compartment member shown in Fig. 25.

### Description of Embodiments

Specific forms for achieving such manual drug dispenser devices according to the present invention are described on the basis of first and second embodiments below.

The first embodiment shown in Figs. 1 to 6 is an embodiment of the above-described first and second solving means (corresponding to claims 1 and 2 in the initial application). The second embodiment shown in Figs. 9 to 11 is an embodiment of the above-described third and fourth solving means (corresponding to claims 3 and 4 in the initial application).

For simplification, etc., the illustrations thereof focus on portions required for describing the invention and portions related thereto, with, for example, a base, a frame, fastener (such as bolts), connectors (such as hinges), electric circuits of motor drives or the like, and electric circuits of controllers or the like not being shown.

In the illustrations, structural portions that correspond to existing ones are shown with the same reference numerals. The descriptions of the existing structural portions given in the background art section are common to the embodiments below. Therefore, the differences from existing structures are focused on with the same descriptions being omitted when necessary.

### First Embodiment

A specific structure of the manual drug dispenser device according to the first embodiment of the present invention is described by citing the drawings.

As shown in Fig. 1, the manual drug dispenser device 500 includes a preliminary dispensing cassette (hereunder referred to as "cassette") 20, a first conveyor 800, and a second conveyor 600. The cassette 20 serves as a cassette including a plurality of boxes 22. The first conveyor 800 is a multi-column conveyor serving as a first conveyor that receives drugs from the cassette 20 and that conveys the drugs in a direction A, which corresponds to a leftward direction in the plane of the figure and which is a first conveying direction. The second conveyor 600 is a single-column conveyor serving as a second conveyor that receives the drugs from the first conveyor 800 and that conveys the drugs in a direction B, which corresponds to a near side in the plane of the figure and which is a second direction.

As shown in Fig. 2, the first conveyor 800 includes compartment column members 810, endless belts 81, and compartment column holding members 820. The compartment column members 810 serve as first receiving members and are hereunder referred to as "first receiving members" 810. The endless belts 81 serve as first endless belts that convey the first receiving members 810 in the direction A, and are hereunder referred to as "belts" 81. The compartment column holding members 820 serve as first mounting members that removably mount the first receiving members 810 on the belts 81, and are hereunder referred to as "first mounting members" 820.

As shown in Fig. 3 or Fig. 4, the second conveyor 600 includes compartment members 610, endless belts 62, and compartment column holding members 620. The compartment members 610 serve as second receiving members and are hereunder referred to as "second receiving members" 610. The endless belts 62 serve as second endless belts that convey the second receiving members 610 in the direction B, and are hereunder referred to as "belts" 62. The compartment column holding members 620 serve as second mounting members that removably mount the second receiving members 610 on the belts 62, and are hereunder referred to as "second mounting members" 620.

As shown in Fig. 5, the manual drug dispenser device 500 includes a compartment column section detecting member 840, a compartment column holding section detecting member 830, and a controlling unit 100. The compartment column section detecting member 840 is provided so as to face a movement path of a first receiving member 810, serves as a first receiving member detecting unit that detects the first receiving member 810, and is hereunder referred to as "first receiving sensor" 840. The compartment column holding section detecting member 830 is provided so as to face a movement path of a first mounting member 820, serves as a first mounting member detecting unit, and is hereunder referred to as "first mounting sensor" 830. The controlling unit 100, which is mounting determining means, functions as a first determining unit that determines whether or not the first receiving member 810 is mounted on the first mounting member 820 on the basis of the detection result provided by the first receiving sensor 840 and the detection result provided by the first mounting sensor 830.

As shown in Fig. 6, the manual drug dispenser device 500 includes a compartment section detecting member 640, a compartment holding section detecting member 630, and a controlling unit 100. The compartment section detecting member 640 is provided so as to face a movement path of a second receiving member 610, serves as a second receiving member detecting unit that detects the second receiving member 610, and is hereunder referred to as "second receiving sensor" 640. The compartment holding section detecting member 630 is provided so as to face a movement path of a second mounting member 620, serves as a second mounting member detecting unit that detects the second mounting member 620, and is hereunder referred to as "second mounting sensor" 630. The controlling unit 100, which is mounting determining means, functions as a first determining unit that determines whether or not the second receiving member 610 is mounted on the second mounting member 620 on the basis of the detection result provided by the second receiving sensor 640 and the detection result provided by the second mounting sensor 630.

With reference to Figs. 18 to 28, the manual drug dispenser device 500 differs from the already described manual drug dispenser device 50 with regard to the following points:
- The second conveyor 600 corresponds to the second conveyor 60, and the second receiving members 610 and the second mounting members 620 correspond to the second receiving members 70.
- The second mounting sensor 630 and the second receiving sensor 640 are provided as detecting members of the second conveyor 600.
- The first conveyor 800 corresponds to the first conveyor 80, and the first receiving members 810 and the first mounting members 820 correspond to the first receiving members 90.
- The first mounting sensor 830 and the first receiving sensor 840 are provided as detecting members of the first conveyor 800.
- The controlling units 100 that function as mounting detecting means are provided.

With reference to Figs. 18 to 28, the manual drug dispenser device 500 is similar to the already described manual drug dispenser device 50 with regard to, for example, the following points:
- A plurality of boxes 22 are provided in the cassette 20 so that the boxes 22 are disposed side by side in rows in a first direction corresponding to the direction A and in columns in a second direction corresponding to the direction B and crossing the first direction (refer to Fig. 15).

If the direction A and the direction B are along the first direction and the second direction and are not parallel to each other, the direction A and the direction B may be inclined with respect to the first direction and the second direction. If the first direction and the second direction are not parallel to each other, they need not be orthogonal to each other.

On the basis of the above-described differences and similarities, the manual drug dispenser device 500 has the following structure.
- In order to receive drugs from the plurality of boxes 22 for one column that are disposed side by side in the direction B (see Fig. 15), as shown in Fig. 2, each first receiving member 810 has a plurality of compartments 93 serving as first compartments provided in a column along the direction B.
- As shown in Fig. 4, a second receiving member 610 has a compartment 73 serving as a second compartment.
- In order to receive the drugs from the compartments 93 for one column in the direction B, the compartments 73, that is, the second receiving members 610 are provided in a column in the direction B.
- A plurality of first mounting members 820 are provided so that the number of first mounting members 820 is larger than the number of columns of the boxes 22 along the direction A, and the first mounting members 820 allow the respective first receiving members 810 to be mounted on the belts 81.
- A plurality of second mounting members 620 are provided so that the number of second mounting members 620 is larger than the number of compartments 93 for one column along the direction B, and the second mounting members 620 allow the respective second receiving members 610 to be mounted on the belts 62.

The structure of the manual drug dispenser device 500 is described in more detail below.

The manual drug dispenser device 500 is provided in the drug dividing and packing machine 10 shown in Figs. 7 and 8. The drug dividing and packing machine 10 is a tablet dividing and packing machine. The tablet dividing and packing machine 10 includes a drawer, a plurality of tablet feeders, the hopper 13, and the packing device 12. The drawer is provided at an upper portion of the housing 11. The tablet feeders are mountably and removably provided at the drawer. The hopper 13 collects the tablets discharged from the tablet feeders. The packing device 12 is provided at a lower portion of the housing 11. The drug dividing and packing machine 10 performs a dividing and packing operation at the packing device 12 by packing, using wrapping paper, the drugs collected by the hopper 13. The manual drug dispenser device 500 is internally provided in the middle portion of the housing 11 of the drug dividing and packing machine 10. When performing a manual dispensing operation, a required portion of the manual drug dispenser device 500 is drawn out from the front face of the housing 11, and, after the manual dispensing operation, the required portion is accommodated in the housing 11 by a push-back operation or a switch operation. In the accommodated state in the housing 11, the manual drug dispenser device 500 successively discharges the drugs to the hopper 13 in response to the dividing and packing operation of the drug dividing and packing machine 10.

As shown in Fig. 4, the second receiving member 610 has a form like that in which a compartment-73 formation portion is separated from the already described second receiving member 70, is formed by injection molding or the like, and corresponds to an integrally formed compartment 73 of the second conveyor 600.

With the second receiving members 610 being in a drug reception state in which the second receiving members 610 are aligned above the belts 62, a back edge 75 is a projection that projects outwardly at one of two sides of an upper edge portion of the second receiving member 610 that are adjacent to other second receiving members 70. This back edge 75 reaches a location above a front edge of the adjacent second receiving member 610 at the one of the two sides. The second receiving member 610 is provided with a clearance in the form of a cutaway portion at a front edge 77 that is situated at the other of the two sides described above. The clearance at the front edge 77 is provided to prevent interference with the back edge 75 extending from the second receiving member 610 adjacent thereto. Of remaining portions of the upper edge portion of the second receiving member 610, a left edge 74 and a right edge 76 are projections. However, these projections need not be formed. Other functions, operations, etc., that are provided due to the fact that each second receiving member 610 has such a shape and structure are as already described in, for example, the background art section.

Each second mounting member 620 has a form like that in which the grip portion 72 and a support thereof are separated from the already described second receiving member 70. As shown in Figs. 1 and 3, as with each second receiving member 70, each mounting member 620 is mounted on the belts 62 using its corresponding grip portion 72.

As with the second receiving members 70, the second mounting members 620 are provided so that the number of second mounting members 620 is larger than the number of rows of the compartments 93 of the first conveyor 800. The second mounting members 620 are disposed in one column along the belts 62.

By mounting the second receiving members 610 on all of the second mounting members 620 or on at least two second mounting members 620, the second conveyor 600 is in a state in which it includes compartments 73 disposed in one column.

As shown in Fig. 4, the grip portion 72 is provided at a front end portion of the second mounting member 620. Each grip portion 72 may be formed together with its corresponding second mounting member 620, or may be attached to its corresponding second mounting member 620 afterwards. A base end portion 72a of each grip portion 72 projects downward from a bottom surface of its corresponding second mounting member 620. Each middle portion 72b of each grip portion 72 changes direction in a left-right direction and is in a substantially horizontal state with respect to the bottom surface of its corresponding second mounting member 620. Each front edge portion 72c of each grip portion 72 extends to a location that is substantially directly below an end surface of its corresponding second mounting member 620. In the illustration, the front edge portions 72c extend in two opposite directions from one base end portion 72a, so that an inverted T shape is formed. However, each grip portion 72 may include two separate portions, such as an L-shaped portion and an inverted L-shaped portion. In either case, the sum of the lengths of the middle portions 72b and the front edge portions 72c of each grip portion 72 is slightly less than half of the width of the belts 62.

Toothed portions 72d at a side of the middle portions 72b and the front edge portions 72c opposing the bottom surface of the corresponding second mounting member 620 are formed such that the cross-sectional shape is substantially equivalent to one tooth of the connecting gears 65 (refer to Fig. 27). The toothed portions 72d have a suitable form that allows them to easily fit in the roots of the toothed portions 63 of the belts 62 (refer to Fig. 26). Therefore, by inserting the roots of the toothed portions 63 between the grip portions 72 and the bottom surfaces of the second mounting members 620, the belts 62 are gripped so as not to be displaced from the second mounting members 620. Here, the gaps between the grip portions 72 and the respective second mounting members 620 have sizes that are substantially equal to or slightly narrower than the thickness of the roots of the belts 62. Therefore, the belts 62 are loosely fitted in the gaps between the grip portions 72 and the respective second mounting members 620. In this fitted state, the second mounting members 620 are swingable by a certain amount around the respective grip portions 72 on the basis of the fact that local portions are easily deformable due to the flexibility and elasticity of the belts 62.

By fitting the two belts 62 in the two portions of the grip portion 72 of each second mounting member 620, each second mounting member 620 forms a bridge at the belts 62. Therefore, by placing the plurality of second mounting members 620 at an equal pitch at the pair of belts 62 that are provided in a tensioned state around the pair of connecting gears 65, the second conveyor 600 is formed. At the same time that the second conveyor 600 is formed, a column of second mounting members 620 in the second conveyor 600 are disposed. At this time, when the connecting gears 65 support the outer half of the widths of the belts 62, and the grip portions 72 of the second mounting members 620 are placed on less than the inner half of the widths of the belts 62, interference between the grip portions 72 of the second mounting members 620 and the connecting gears 65 are properly prevented. Other functions, operations, etc., that are provided due to the fact that each second mounting member 620 has such a shape and structure in relation to the grip portions 72 are as already described in, for example, the background art section.

As shown in Fig. 6, in order to make it possible for the second mounting members 620 to mountably and removably hold one second receiving member 610 each, an engaging portion 612 is provided at, for example, a lower surface of the corresponding second receiving member 610, and an engaging portion 622 is provided at, for example, an upper surface of the corresponding second mounting member 620. Each engaging portion 612 and its corresponding engaging portion 622 may maintain a mounted state of the second receiving member 610 on the second mounting member 620 during ordinary operation (such as when drugs are conveyed) on the one hand, and may allow the second receiving member 610 to be removed from the corresponding second mounting member 620 if a force that is stronger than that during the ordinary operation is applied on the other. Examples of a combination of the engaging portion 612 and the engaging portion 622 include a pair of magnets that attract each other when they are close to each other or contact each other, anything in which a protrusion is pushed into a spring gap, or anything in which a hook is fastened. Although a top surface of the illustrated second mounting member 620 is formed into a rectangular dish shape to position the second receiving member 610, the second receiving member 610 may be positioned using a positioning pin, a cutaway portion, or the like as long as the second receiving member 610 can be positioned when it is being mounted.

The second mounting sensor 630 is such that its direction of detection is in the direction of the movement path of a second mounting member 620, and is fixed to, for example, a frame (not shown). When a second mounting member 620 arrives at a detection position, the second mounting sensor 630 reacts to a detection portion 624 that is mounted on the second mounting member 620, and detects the second mounting member 620. The second receiving sensor 640 is such that its direction of detection is in the direction of the movement path of a second receiving member 610, and is fixed to, for example, a frame. When a second receiving member 610 that is properly mounted on the second mounting member 620 arrives at a detection position, the second mounting sensor 640 reacts to a detection portion 614 that is mounted on the corresponding second receiving member 610, and detects the second receiving member 610.

A cover 67 (refer to Fig. 27), provided at the second conveyor 600, is formed by, for example, bending a rectangular metallic plate at a constant curvature or with a changing curvature, and is set at a drug-discharge side end portion of the two end portions of the second conveyor 600. The cover 67 is disposed so as to contact the back edge 75 of the second receiving member 610 that has arrived at a drug discharge position. The cover 67 contacts the back edge 75 only during an early swing period of the second receiving member 610 with the swing amount being smaller than that when the second receiving member 610 swings freely. The curvature and the setting position of the cover 67 are adjusted so that, during a late swing period, the second receiving member 610 separates from the cover 67 and swings freely. Of the portion of the cover 67 that contacts the back edge 75, a final contact portion (which is where the back edge 75 contacts just before the back edge 75 separates from the cover 67) is provided with an uneven portion (not shown). The uneven portion is a member having a surface provided with, for example, several protrusions that are 1 mm high, and is provided at the cover 67. Other functions, operations, etc., that are provided due to the fact that the cover 67 has such a shape and structure are as already described in, for example, the background art section.

As shown in Fig. 2, each first receiving member 810 has a form like that in which a compartment-93 formation portion is separated from the already described first receiving member 90, is formed by injection molding or the like, and includes integrally formed compartments 93 for one column of the first conveyor 800.

Each second mounting member 820 has a form like that in which the grip portion 94 and a support thereof are separated from the already described first receiving member 90. As shown in Figs. 1 and 2, as with each first receiving member 90, each first mounting member 820 is mounted on the belts 81 using its corresponding grip portion 94. As with the first receiving members 90, the number of first mounting members 820 is larger than the number of columns of the boxes 22 of the preliminary dispensing cassette 20. The first mounting members 820 are disposed in one column along the belts 81.

By mounting the first receiving members 810 on all of the first mounting members 820 or on at least two first mounting members 820, the first conveyor 800 is in a state in which it includes compartments 93 disposed in a lattice.

As shown in Fig. 5, in order to make it possible for the first mounting members 820 to mountably and removably hold one first receiving member 810 each, engaging portions 812 are provided at, for example, a lower surface of the corresponding first receiving member 810, and engaging portions 822 are provided at, for example, an upper surface of the corresponding first mounting member 820. The engaging portions 812 and the engaging portions 822 may maintain mounted states of the first receiving members 810 on the respective first mounting members 820 during ordinary operation (such as when drugs are conveyed) on the one hand, and may allow the first receiving members 810 to be removed from the respective first mounting members 820 if a force that is stronger than that during the ordinary operation is applied on the other. Examples of a combination of the engaging portions 812 and the engaging portions 822 include a pair of magnets that attract each other when they are close to each other or contact each other, anything in which a protrusion is pushed into a spring gap, or anything in which a hook is fastened. Although a top surface of the illustrated first mounting member 820 is formed into a rectangular dish shape to position the first receiving member 810, the first receiving member 810 may be positioned using a positioning pin, a cutaway portion, or the like as long as the first receiving member 810 can be positioned when it is being mounted.

The first mounting sensor 830 is such that its direction of detection is in the direction of the movement path of a first mounting member 820, and is fixed to, for example, a frame (not shown). When a first mounting member 820 arrives at a detection position, the first mounting sensor 830 reacts to a detection portion 824 that is mounted on the corresponding first mounting member 820, and detects the first mounting member 820. The first receiving sensor 840 is such that its direction of detection is in the direction of the movement path of a first receiving member 810, and is fixed to, for example, a frame. When a second receiving member 810 that is properly mounted on the first mounting member 820 arrives at a detection position, the first mounting sensor 840 reacts to a detection portion 814 that is mounted on the corresponding first receiving member 810, and detects the first receiving member 810.

It is sufficient for the above-described detecting members 630 to 840, that is, the second mounting sensor 630 and the second receiving sensor 640 and the first mounting sensor 830 and the first receiving sensor 840 detect the detection portions 614 to 824, that is, the detection portions 614, 624, 814, and 824 that have arrived at the detection positions, respectively, on the one hand, and not to detect the detection portions 614 to 824 that are not positioned at the detection positions, respectively, on the other. Therefore, any detection system may be used for the detection system of the detecting members 630 to 840. For example, transmission photodetectors, reflection photodetectors, magnetic sensors using Hall elements, magneto-induction microswitches, or capacitive sensors may be used. When transmission photodetectors are used for the detecting members 630 to 840, if the second receiving members 610, the second mounting members 620, the first receiving members 810, and the first mounting members 820 are opaque, they, themselves, become detection portions, so that the detection portions 614 to 824 need not be added.

The mounting determining means are realized by expanding logical operation functions of the controlling units 100 which are controllers or host controllers for controlling the operation of the manual drug dispenser device 500. However, the mounting determining means may be realized using logic circuits used exclusively for a determining operation, electric circuits for wired logic, PLA, or the like, or computer or sequencer programs.

In the structure shown in Fig. 6, the second mounting member 620 and the second receiving member 610 mounted on the second mounting member 620 are detected at about the same time by the second mounting sensor 630 and the second receiving sensor 640, respectively. In the structure shown in Fig. 5, the first mounting member 820 and the first receiving member 810 mounted on the first mounting member 820 are detected at about the same time by the first mounting sensor 830 and the first receiving sensor 840, respectively. The determination logic of the mounting determining means may be the following simple logic. That is, if the second receiving member 610 is detected during the detection of the second mounting member 620, which is a holding member, it is determined that the second receiving member 610 is mounted on the second mounting member 620; whereas if, regardless of the fact that the second mounting member 620 is detected, the second receiving member 610 is not detected during the detection of the second mounting member 620, it is determined that the second receiving member 610 is not mounted on the second mounting member 620. This similarly applies to the case in which it is determined whether or not a first receiving member 810 is mounted on its corresponding first mounting member 820.

When the second mounting sensor 630 and the second receiving sensor 640 and the first mounting sensor 830 and the first receiving sensor 840 are disposed at distant locations instead of at close locations, information regarding whether or not a member that needs to be detected first in accordance with a movement direction may be temporarily stored in, for example, a memory of the controlling unit 100 functioning as mounting determining means, and this may be compared with corresponding stored information when the other member involved in the mounting operation is detected later.

The mode of use and operation of the manual drug dispenser device 50 according to the first embodiment are described.

For example, when, during initial adjustment that is performed immediately after production operations, during confirmation of operations after repairing/replacing parts, or during confirmation of a re-mounting operation after a removing and cleaning operation has been performed, either one or both of an operation for mounting a second receiving member 610 on a second mounting member 620 in the second conveyor 600 and an operation for mounting a first receiving member 810 on a first mounting member 820 in the first conveyor 800 are performed, for confirming the mounting operation, the manual drug dispenser device 500 is subjected to a test operation while the preliminary dispensing cassette 20 is empty without drugs being put therein.

Although the test operation may be the same as the ordinary operation performed drug putting operations, it is desirable for the test operation to be performed in an operation mode exclusively for a test in which the operation is performed at a speed that is lower than that during the ordinary operation. In the test operation, since it is not necessary to synchronize the operation of the second conveyor 600 and the operation of the first conveyor 800, the conveyors 600 and 800 may be operated so as to be asynchronous to each other, or may obviously be concurrently operated. Further, in order to prevent damage to members caused by, for example, mechanical interference resulting from improper mounting, it is desirable for an emergency stop to be performed when driving current of the motors 35 and 45 is detected and the current is excessive.

During the test operation of the manual drug dispenser device 500, as regards the second conveyor 600, the plurality of second mounting member 620 successively arrive at the detection position of the second mounting sensor 630 one at a time as the belts 62 circulate. At this time, if the second receiving members 610 are mounted on the respective second mounting members 620, the second receiving members 610, as expected, arrive at the detection position of the second receiving sensor 640 one at a time. The controlling unit 100 functioning as mounting determining means checks whether or not the second receiving members 610 are mounted on the corresponding second mounting members 620.

As also regards the first conveyor 800, the plurality of first mounting members 820 successively arrive at the detection position of the first mounting sensor 830 one at a time as the belts 81 circulate. At this time, if the first receiving members 810 are mounted on the respective first mounting members 820, the first receiving members 810, as expected, arrive at the detection position of the first receiving sensor 840 one at a time. The controlling unit 100 functioning as mounting determining means checks whether or not the first receiving members 810 are mounted on the corresponding first mounting members 820.

If it is detected that any one of the first receiving members 810 and the second receiving members 610 is not mounted, this is indicated by an emergency stop and by a dedicated or multi-purpose display unit or lighting member that is appropriate. Therefore, any receiving member that has not been mounted can be mounted.

When it is confirmed that all of the second receiving members 610 and the first receiving members 810 have been mounted, it is possible to cause the manual drug dispenser device 500 to undergo ordinary operation. In the ordinary operation, as already described for the case of existing devices, prior to a manual dispensing operation, the preliminary dispensing cassette 20 is drawn out from the housing 11 and, in accordance with a doctor's written instruction or display, drugs are manually dispensed into the boxes 22. After the manually dispensing operation, the preliminary dispensing cassette 20 is moved back into the housing 11. Then, from the accommodated manual drug dispenser device 500, the drugs are transferred to the first conveyor 800 all at once.

Next, in response to an automatic dividing and packing operation of the drug dividing and packing machine 10, the drugs in the leading-column compartments among the compartments 93 of the first conveyor 800 are transferred to the compartments 73 of the second conveyor 600 with the divided state of the drugs being maintained. Further, the drugs in the leading compartment among the compartments 73 of the second conveyor 600 is put into the packing device 12 via the hopper 13. When the putting operation of the drugs, each in one compartment, is repeated, and the second conveyor 40 becomes empty, the drugs for the leading-column compartments are transferred from the first conveyor 800 to the second conveyor 600, and the putting operation of drugs, each in one compartment, is started again. In this way, in accordance with the division of the drugs at the time of the manual dispensing operation, the drugs are supplied from the manual drug dispenser device 500 and are packed by one compartment at a time by the packing device 12.

After such an ordinary operation, that is, an automatic successive supplying operation of drugs that are manually dispensed in the compartments, when it is necessary to clean the compartments 73 and the compartments 93, the second receiving members 610 are removed from the second mounting members 620 and cleaned and the first receiving members 810 are removed from the first mounting members 820 and cleaned. After the cleaning, the second receiving members 610 are mounted again on the second mounting members 620 and the first receiving members 810 are mounted again on the first mounting members 820. Since the second receiving members 610 are mountable on and removable from the second mounting members 620 and the first receiving members 810 are mountable on and removable from the first mounting members 820, it is possible to easily perform operations performed before and after the cleaning operations that can be performed outside the device, in addition to the cleaning operations that can be performed outside the device. Further, after mounting the second receiving members 610 and the first receiving members 810 again, as mentioned above, it is possible to automatically confirm any mountings that have not been performed in a test operation.

### Second Embodiment

A specific structure of a manual drug dispenser device according to a second embodiment of the present invention is described while citing the drawings.

The manual drug dispenser device differs from that according to the above-described first embodiment with regard to the following points as shown in Fig. 9:
- A second mounting sensor 630 is formed using a set of three second mounting sensors 630a, 630b, and 630c, which are capable of instantaneously detecting the position of a second mounting member 620 in a direction B corresponding to a movement direction thereof. The second mounting sensor 60 includes the second mounting sensors 630a, 630b, and 630c.
- A second receiving sensor 640 is formed using a set of five second receiving sensors 640a, 640b, 640c, 640d, and 640e, which are capable of instantaneously detecting the position of a second receiving member 610 in a direction B corresponding to a movement direction thereof and the position thereof in a direction A that is orthogonal to the direction B. The second receiving sensor 640 includes the second mounting sensors 640a, 640b, 640c, 640d, and 640e.
- Although not shown, a first mounting sensor 830 and a first receiving sensor 840 are similarly formed using sensors. The first mounting sensor 830 includes sensors that are capable of instantaneously detecting the position of a first mounting member 820 in the direction A. The second receiving sensor 840 includes sensors that are capable of detecting the position of a first receiving member 810 in the direction A and the position thereof in the direction B.

Using the second mounting sensors 630a, 630b, and 630c as specific examples, a method for instantaneously detecting a position P of a detection portion 624 of a second mounting member 620 in the direction B is described with reference to Fig. 10.

Detection levels of the set of three second mounting sensors 630a, 630b, and 630c are obtained using an analog signal or a multi-valued digital signal. When significant detection values, which are not zero and indicated by black dots in Fig. 10, are output from all of the second mounting sensors 630a, 630b, and 630c, the following is carried out. That is, using a coordinate system in which the detection values are indicated along the vertical axis and the movement direction is indicated along the horizontal axis, an approximate curve, such as a quadratic curve, passing through each detection value is assumed, and a calculation for determining horizontal-axis coordinate values of an inflection point/upper pole point of the curve is performed. As calculation results, the position P of the second mounting member 620 is obtained.

Similarly, of the set of five second mounting sensors 640a, 640b, 640c, 640d, and 640e, similar calculations are performed using the set of three second mounting sensors 640a, 640b, and 640c to obtain the position of the second receiving member 610 in the movement direction. Similarly, of the set of five second mounting sensors 640a, 640b, 640c, 640d, and 640e, similar calculations are performed using the set of three second mounting sensors 640d, 640b, and 640e to obtain the position of the second receiving member 610 in a direction orthogonal to the movement direction.

The position of a first mounting member 820 in the direction A and the positions of a first receiving member 810 in the direction A and the direction B, though similar descriptions regarding how they are obtained are not given, are similarly instantaneously detected.

If the positions of a second receiving member 610, the position of a second mounting member 620, the positions of a first receiving member 810, and the position of a first mounting member 820 need not be instantaneously detected, that is, may be detected with time based on accumulations of the detection values and the movements of these members, the following structure may be used. That is, the second receiving sensor 640, the second mounting sensor 630, the first receiving sensor 840, and the first mounting sensor 830 need not be formed using sensors. Even if they are single sensors as shown in Figs. 5 and 6, these positions are detectable. A method in this case is described with reference to Fig. 11 and with the second mounting sensor 630 being a specific example. Also in this case, if the same coordinate system shown in Fig. 10 is used, while moving a second mounting member 620, the second mounting sensor 630 is operated in synchronism with a movement distance during the movement thereof. Then, when, as indicated by black dots in Fig. 10, the second mounting sensor 630 successively outputs significant detection values that are not zero, an approximate curve, such as a quadratic curve, whose variance from these detection values is small, is determined by a least-square method or the like, and a calculation for determining horizontal-axis coordinate values of an inflection point/upper pole point thereof is performed. As calculation results, the position P of the second mounting member 620 is obtained.

Whether the detections are performed instantaneously or with time, when the position of the second mounting member 620 and the position of the second receiving member 610 that has been mounted thereon or that should be mounted are detected, the controlling unit 100 functioning as mounting determining means not only determines whether or not the second receiving member 610 has been mounted on the second mounting member 620, but also determines whether or not the second receiving member 610 has been properly mounted on the second mounting member 620 on the basis of the detection results of these positions. In this respect, the controlling unit 100 functioning as mounting determining means or a first determining unit functions as a third determining unit that determines whether or not the second mounting member 620 is properly mounted on the second mounting member 620 on the basis of the detection result provided by the second receiving sensor 640 and the detection result provided by the second mounting sensor 630.

When the position of the first mounting member 820 and the position of the first receiving member 810 that has been mounted thereon or that should be mounted are detected, the controlling unit 100 functioning as mounting determining means not only determines whether or not the first receiving member 810 is mounted on the first mounting member 820, but also determines whether or not the first receiving member 810 has been properly mounted on the first mounting member 820 on the basis of the detection results of these positions. In this respect, the controlling unit 100 functioning as mounting determining means or a second determining unit functions as a fourth determining unit that determines whether or not the first receiving member 810 is properly mounted on the first mounting member 820 on the basis of the detection result provided by the first receiving sensor 840 and the detection result provided by the first mounting sensor 830.

Whether or not the mounting states are proper mounting states are determined by checking, for example, whether or not a relative distance between the first mounting member 820 and the first receiving member 810 in the direction A and a relative distance between the second mounting member 620 and the second receiving member 610 in the direction B are within a predetermined range of a predetermined standard from a known value, such as a design value or an actually measured value. Alternatively, they are determined by checking whether or not the position of the first receiving member 810 at an upstream side and a downstream side in the direction B and the position of the second receiving member 610 at an upstream side and a downstream side in the direction A are, as expected, within a predetermined range of a predetermined standard from a known value, such as a design value or an actually measured value.

In this case, even if the first receiving member 810 has been mounted on the first mounting member 820, or the second receiving member 610 has been mounted on the second mounting member 620, when the mounting operation is not properly performed and there is an undesired gap or displacement between the members, it is determined that the mounting state is not a proper mounting state on the basis of the detections of the positions. Therefore, even if the improper mountings are not as serious as to result in immediate problems, such as mechanical damage or loss of drugs, such improper mountings are to be corrected. Consequently, it is possible to eliminate at an early stage even the possibility of the occurrence of a problem caused by improper mountings at a later stage. Thus, the effectiveness in preventing the occurrence of problems is high.

### [Other]

Although, in the embodiments, the boxes 22 of the preliminary dispensing cassette 20 are disposed side by side in 6 rows and 11 columns, as long as they can be mounted in the housing, the boxes 22 may be vertically and horizontally disposed in a different number of rows and columns.

For example, the boxes 22 may be disposed side by side in 3 rows and 7 columns when manual dispensing of drugs for seven days, three times a day, is considered important. Alternatively, the boxes 22 may be disposed side by side in 4 rows and 10 columns when manual dispensing of drugs for 10 days, four times a day, is considered important. Still alternatively, the boxes 22 may be disposed side by side in 8 rows and 14 columns when manual dispensing of drugs for 14 days, four times a day, is considered important.

Although, in the embodiments, the first conveyor is not provided with a member, such as a stationary plate for guiding and restricting the movement of each first receiving member, the first conveyor may be provided with such a member (refer to, PTL 6).

Further, in the embodiments, the second conveyor 600 and the first conveyor 800 circulate. Their directions of movement may be either one direction or two-way directions. When an origin serving as a reference of circulation is set, an origin sensor that detects, for example, a particular second mounting member 620 or a particular first mounting member 820 may be provided.

In the embodiments, the case in which confirmations are made as to whether or not mounting operations have been performed and whether or not the mounting operations have been properly performed during test operation is described. However, whether or not mounting operations have been performed and whether or not the mounting operations have been properly performed may be confirmed not only when test operations are not performed or when test operations are performed, but also when ordinary operations in which a drug putting operation is performed. By making confirmations any time, even if the mounting states that were originally proper mounting states gradually become improper mounting states due to use, or suddenly become improper mounting states unexpectedly, such problems can be immediately detected after they have occurred. Therefore, these problems can be properly solved before they become serious.

### Industrial Applicability

The manual drug dispenser device according to the present invention is capable of being installed in a powder dividing and packing device and a tablet-and-powder combination type drug dividing and packing machine, in addition to a tablet dividing and packing machine shown in Figs. 7 and 8. It is possible to provide a manual drug dispenser device and a packing device in a housing and form a manual dispensing type dividing and packing device.

The specific modes of providing the housing with a manual drug dispenser device is not limited to the mode of mounting the manual dispensing cassette so that it can be drawn out from the housing as in the embodiments. Since the drugs only need to be manually dispensed into the boxes of the preliminary dispensing cassette, for example, the preliminary dispensing cassette may be fixed to a top surface of the housing, or may be mounted on and removed from a top plate of the housing.

### Reference Signs List

10 drug dividing and packing machine
11 housing
12 packing device
13 hopper
14 manual drug dispenser device
20 cassette (preliminary dispensing cassette)
21 cassette frame
22 box
23 drawing-out member
24 shutter operation member
25 motor
30 multi-column conveyor (conveyor)
31 endless belt
32 movable plate (dividing plate)
33 compartment
34 stationary plate (partition plate, side plate)
35 motor
40 single-column conveyor (conveyor)
41 endless belt
42 movable plate (dividing plate)
43 compartment
44 stationary plate (side plate)
45 motor
50 manual drug dispenser device
60 single-column conveyor (conveyor)
61 conveyor section
62 second conveyor (endless belt)
63 toothed portion
65 connecting gear
66 stationary plate (side plate)
67 cover (surround plate)
68 uneven portion
70 compartment member
71 box member
72 grip portion
73 second compartment (compartment)
74 left edge
75 back edge (projection)
76 right edge
77 front edge (clearance portion)
78 protrusion
80 multi-column conveyor (conveyor)
81 first belt (endless belt)
82 toothed belt
83 toothed portion
84 connecting gear
90 compartment column member
91 long box member
92 partition wall
93 first compartment (compartment)
94 clamping portion
95 protrusion
100 first determining unit, second determining unit, third determining unit, fourth determining unit
500 manual drug dispenser device
600 second conveyor (single-column conveyor)
610 second receiving member (compartment member)
612 engaging portion
614 detection portion
620 second mounting member (compartment holding member)
622 engaging portion
624 detection portion
630 second mounting member detecting unit (compartment holding section detecting member)
640 second receiving member detecting unit (compartment section detecting member)
800 first conveyor (multi-column conveyor)
810 first receiving member (compartment column member)
812 engaging portion
814 detection portion
820 first mounting member (compartment column holding member)
822 engaging portion
824 detection portion
830 first mounting member detecting unit (compartment column holding section detecting member)
840 first receiving member detecting unit (compartment column section detecting member)
A first direction, first conveying direction
B second direction, second conveying direction

## Claims

1. A manual drug dispenser device (500) comprising:
a cassette (20) including a plurality of boxes (22), the boxes being disposed side by side in a row along a first direction (A) and the boxes being disposed side by side in a column along a second direction (B) crossing the first direction;
a first conveyor (800) that receives drugs all at once from the cassette and that conveys the drugs in a first conveying direction along the first direction; and
a second conveyor (600) that receives the drugs from the first conveyor and that conveys the drugs in a second conveying direction along the second direction,
wherein the first conveyor includes first receiving members (810), an endless first belt (81), and a plurality of first mounting members (820), the first receiving members including a plurality of first compartments (93) provided in a column along the second direction for receiving the drugs from the boxes for one column, the first belt conveying the first receiving members in the first conveying direction, the number of first mounting members being larger than the number of columns of the boxes along the first direction, the plurality of first mounting members allowing the plurality of first receiving members to be removably mounted on the first belt, and
wherein the manual drug dispenser device further comprises
a first receiving member detecting unit (840) that is provided so as to face a movement path of each first receiving member, the first receiving member detecting unit detecting each first receiving member;
a first mounting member detecting unit (830) that is provided so as to face a movement path of each first mounting member, the first mounting member detecting unit detecting each first mounting member; and
a first determining unit (100) that determines whether or not the first receiving members are mounted on the first mounting members on the basis of a detection result provided by the first receiving member detecting unit and a detection result provided by the first mounting member detecting unit.

2. A manual drug dispenser device (500) comprising:
a cassette (20) including a plurality of boxes (22), the boxes being disposed side by side in a row along a first direction (A) and the boxes being disposed side by side in a column along a second direction (B) crossing the first direction;
a first conveyor (800) that receives drugs all at once from the cassette and that conveys the drugs in a first conveying direction along the first direction; and
a second conveyor (600) that receives the drugs from the first conveyor and that conveys the drugs in a second conveying direction along the second direction,
wherein the second conveyor includes a plurality of second receiving members (610), an endless second belt, and a plurality of second mounting members (620), the plurality of second receiving members including a plurality of second compartments (73) provided in a column along the second direction for receiving the drugs from a plurality of first compartments (93) of the first conveyor (800) for one column, the second belt conveying the plurality of second receiving members in the second conveying direction, the number of second mounting members being larger than the number of first compartments for one column along the second direction, the plurality of second mounting members allowing the plurality of second receiving members to be removably mounted on the second belt, and
wherein the manual drug dispenser device further comprises
a second receiving member detecting unit (640) that is provided so as to face a movement path of each second receiving member, the second receiving member detecting unit detecting each second receiving member;
a second mounting member detecting unit (630) that is provided so as to face a movement path of each second mounting member, the second mounting member detecting unit detecting each second mounting member; and
a second determining unit (100) that determines whether or not the second receiving members are mounted on the second mounting members on the basis of a detection result provided by the second receiving member detecting unit and a detection result provided by the second mounting member detecting unit.

3. The manual drug dispenser device according to Claim 1, wherein the first receiving member detecting unit is capable of detecting a position of each first receiving member in the first conveying direction and/or the second conveying direction,
wherein the first mounting member detecting unit is capable of detecting a position of each first mounting member in the first conveying direction, and
wherein the manual drug dispenser device comprises a third determining unit (100) that determines whether or not the first receiving members are properly mounted on the first mounting members on the basis of the detection result provided by the first receiving member detecting unit and the detection result provided by the first mounting member detecting unit.

4. The manual drug dispenser device according to Claim 2, wherein the second receiving member detecting unit is capable of detecting a position of each second receiving member in the second conveying direction and/or the first conveying direction,
wherein the second mounting member detecting unit is capable of detecting a position of each second mounting member in the second conveying direction, and
wherein the manual drug dispenser device comprises a fourth determining unit (100) that determines whether or not the second receiving members are properly mounted on the second mounting members on the basis of the detection result provided by the second receiving member detecting unit and the detection result provided by the second mounting member detecting unit.

## Patentansprüche

1. Vorrichtung (500) für manuelle Arzneimittelabgabe, die aufweist:
eine Kassette (20), die mehrere Kästen (22) umfasst, wobei die Kästen in einer Reihe längs einer ersten Richtung (A) nebeneinander angeordnet sind und die Kästen in einer Spalte längs einer zweiten Richtung (B) nebeneinander angeordnet sind, die die erste Richtung kreuzt;
einen ersten Förderer (800), der alle Arzneimittel auf einmal aus der Kassette aufnimmt und der die Arzneimittel in eine erste Beförderungsrichtung längs der ersten Richtung befördert; und
einen zweiten Förderer (600), der die Arzneimittel vom ersten Förderer aufnimmt und der die Arzneimittel in eine zweite Beförderungsrichtung längs der zweiten Richtung befördert,
wobei der erste Förderer erste Aufnahmeelemente (810), ein erstes Endlosband (81) und mehrere erste Befestigungselemente (820) aufweist, wobei die ersten Aufnahmeelemente mehrere erste Fächer (93) aufweisen, die in einer Spalte längs der zweiten Richtung zum Aufnehmen der Arzneimittel aus den Kästen für eine Spalte vorgesehen sind, wobei das erste Band die ersten Aufnahmeelemente in die erste Beförderungsrichtung befördert, wobei die Anzahl der ersten Befestigungselemente größer ist als die Anzahl der Spalten der Kästen längs der ersten Richtung, wobei es die mehreren ersten Befestigungselemente den mehreren ersten Aufnahmeelementen ermöglicht, entfernbar am ersten Band befestigt zu werden, und
wobei die manuelle Arzneimittelabgabevorrichtung ferner aufweist:
eine erste Aufnahmeelementdetektionseinheit (840), die so vorgesehen ist, dass sie zu einem Bewegungsweg von jedem ersten Aufnahmeelement weist, wobei die erste Auf nahmeelementdetektionseinheit jedes erste Aufnahmeelement detektiert;
eine erste Befestigungselementdetektionseinheit (830), die so vorgesehen ist, dass sie zu einem Bewegungsweg von jedem ersten Befestigungselement weist, wobei die erste Befestigungselementdetektionseinheit jedes erste Befestigungselement detektiert; und
eine erste Feststellungseinheit (100), die auf der Grundlage eines Detektionsresultats, das durch die erste Aufnahmeelementdetektionseinheit bereitgestellt wird, und eines Detektionsresultats, das durch die erste Befestigungselementdetektionseinheit bereitgestellt wird, feststellt, ob die ersten Aufnahmeelemente an den ersten Befestigungselementen befestigt sind.

2. Vorrichtung (500) für manuelle Arzneimittelabgabe, die aufweist:
eine Kassette (20), die mehrere Kästen (22) umfasst, wobei die Kästen in einer Reihe längs einer ersten Richtung (A) nebeneinander angeordnet sind und die Kästen in einer Spalte längs einer zweiten Richtung (B) nebeneinander angeordnet sind, die die erste Richtung kreuzt;
einen ersten Förderer (800), der alle Arzneimittel auf einmal aus der Kassette aufnimmt und der die Arzneimittel in eine erste Beförderungsrichtung längs der ersten Richtung befördert; und
einen zweiten Förderer (600), der die Arzneimittel vom ersten Förderer aufnimmt und der die Arzneimittel in eine zweite Beförderungsrichtung längs der zweiten Richtung befördert,
wobei der zweite Förderer mehrere zweite Aufnahmeelemente (610), ein zweites Endlosband und mehrere zweite Befestigungselemente (620) aufweist, wobei die mehreren zweiten Aufnahmeelemente mehrere zweite Fächer (73) aufweisen, die in einer Spalte längs der zweiten Richtung zum Aufnehmen der Arzneimittel von mehreren ersten Fächern (93) des ersten Förderers (800) für eine Spalte vorgesehen sind, wobei das zweite Band die mehreren zweiten Aufnahmeelemente in die zweite Beförderungsrichtung befördert, wobei die Anzahl der zweiten Befestigungselemente größer ist als die Anzahl der ersten Fächer für eine Spalte längs der zweiten Richtung, wobei es die mehreren zweiten Befestigungselemente den mehreren zweiten Aufnahmeelementen ermöglichen, entfernbar am zweiten Band befestigt zu werden, und
wobei die manuelle Arzneimittelabgabevorrichtung ferner aufweist:
eine zweite Aufnahmeelementdetektionseinheit (640), die so vorgesehen ist, dass sie zu einem Bewegungsweg von jedem zweiten Aufnahmeelement weist, wobei die zweite Aufnahmeelementdetektionseinheit jedes zweite Aufnahmeelement detektiert;
eine zweite Befestigungselementdetektionseinheit (630), die so vorgesehen ist, dass sie zu einem Bewegungsweg von jedem zweiten Befestigungselement weist, wobei die zweite Befestigungselementdetektionseinheit jedes zweite Befestigungselement detektiert; und
eine zweite Feststellungseinheit (100), die auf der Grundlage eines Detektionsresultats, das durch die zweite Aufnahmeelementdetektionseinheit bereitgestellt wird, und eines Detektionsresultats, das durch die zweite Befestigungselementdetektionseinheit bereitgestellt wird, feststellt, ob die zweiten Aufnahmeelemente an den zweiten Befestigungselementen befestigt sind.

3. Vorrichtung für manuelle Arzneimittelabgabe nach Anspruch 1, wobei die erste Auf nahmeelementdetektionseinheit imstande ist, eine Position von jedem ersten Aufnahmeelement in der ersten Beförderungsrichtung und/oder der zweiten Beförderungsrichtung zu detektieren,
wobei die erste Befestigungselementdetektionseinheit imstande ist, eine Position von jedem ersten Befestigungselement in der ersten Beförderungsrichtung zu detektieren, und
wobei die manuelle Arzneimittelabgabevorrichtung eine dritte Feststellungseinheit (100) aufweist, die auf der Grundlage des Detektionsresultats, das durch die erste Auf nahmeelementdetektionseinheit bereitgestellt wird, und des Detektionsresultats, das durch die erste Befestigungselementdetektionseinheit bereitgestellt wird, feststellt, ob die ersten Aufnahmeelemente richtig an den ersten Befestigungselementen befestigt sind.

4. Vorrichtung für manuelle Arzneimittelabgabe nach Anspruch 2, wobei die zweite Aufnahmeelementdetektionseinheit imstande ist, eine Position von jedem zweiten Aufnahmeelement in der zweiten Beförderungsrichtung und/oder der ersten Beförderungsrichtung zu detektieren,
wobei die zweite Befestigungselementdetektionseinheit imstande ist, eine Position von jedem zweiten Befestigungselement in der zweiten Beförderungsrichtung zu detektieren, und
wobei die manuelle Arzneimittelabgabevorrichtung eine vierte Feststellungseinheit (100) aufweist, die auf der Grundlage des Detektionsresultats, das durch die zweite Aufnahmeelementdetektionseinheit bereitgestellt wird, und des Detektionsresultats, das durch die zweite Befestigungselementdetektionseinheit bereitgestellt wird, feststellt, ob die zweiten Aufnahmeelemente richtig an den zweiten Befestigungselementen befestigt sind.

## Revendications

1. Dispositif manuel de distribution de médicaments (500), comprenant :
une cassette (20) comportant une pluralité de cases (22), lesdites cases étant disposées côte à côte sur une rangée dans une première direction (A) et lesdites cases étant disposées côte à côte sur une colonne dans une deuxième direction (B) croisant la première direction ;
un premier convoyeur (800) recevant en une seule fois la totalité des médicaments de la cassette et transportant les médicaments dans une première direction de transport le long de la première direction ; et
un deuxième convoyeur (600) recevant les médicaments du premier convoyeur et transportant les médicaments dans une deuxième direction de transport le long de la deuxième direction,
où le premier convoyeur comporte de premiers éléments de réception (810), une première courroie sans fin (81), et une pluralité de premiers éléments de montage (820), les premiers éléments de réception comportant une pluralité de premiers compartiments (93) prévus sur une colonne dans la deuxième direction pour recevoir les médicaments des cases pour une colonne, la première courroie transportant les premiers éléments de réception dans la première direction de transport, le nombre des premiers éléments de montage étant supérieur au nombre des colonnes des cases dans la première direction, la pluralité de premiers éléments de montage permettant à la pluralité de premiers éléments de réception d'être montés de manière amovible sur la première courroie, et
où le dispositif manuel de distribution de médicaments comporte en outre une première unité de détection d'élément de réception (840) prévue de manière à être opposée à un chemin de déplacement de chaque premier élément de réception, la première unité de détection d'élément de réception détectant chaque premier élément de réception ;
une première unité de détection d'élément de montage (830) prévue de manière à être opposée à un chemin de déplacement de chaque premier élément de montage, la première unité de détection d'élément de montage détectant chaque premier élément de montage ; et
une première unité de détermination (100) déterminant si les premiers éléments de réception sont montés ou non sur les premiers éléments de montage sur la base d'un résultat de détection délivré par la première unité de détection d'élément de réception et d'un résultat de détection délivré par la première unité de détection d'élément de montage.

2. Dispositif manuel de distribution de médicaments (500) comprenant :
une cassette (20) comportant une pluralité de cases (22), lesdites cases étant disposées côte à côte sur une rangée dans une première direction (A) et lesdites cases étant disposées côte à côte sur une colonne dans une deuxième direction (B) croisant la première direction ;
un premier convoyeur (800) recevant en une seule fois la totalité des médicaments de la cassette et transportant les médicaments dans une première direction de transport le long de la première direction ; et
un deuxième convoyeur (600) recevant les médicaments du premier convoyeur et transportant les médicaments dans une deuxième direction de transport le long de la deuxième direction,
où le deuxième convoyeur comporte une pluralité de deuxièmes éléments de réception (610), une deuxième courroie sans fin, et une pluralité de deuxièmes éléments de montage (620), la pluralité de deuxièmes éléments de réception comportant une pluralité de deuxièmes compartiments (73) prévus sur une colonne dans la deuxième direction pour recevoir les médicaments d'une pluralité de premiers compartiments (93) du premier convoyeur (800) pour une colonne, la deuxième courroie transportant la pluralité de deuxièmes éléments de réception dans la deuxième direction de transport, le nombre des deuxièmes éléments de montage étant supérieur au nombre des premiers compartiments pour une colonne dans la deuxième direction, la pluralité de deuxièmes éléments de montage permettant à la pluralité de deuxièmes éléments de réception d'être montés de manière amovible sur la deuxième courroie, et
où le dispositif manuel de distribution de médicaments comprend en outre une deuxième unité de détection d'élément de réception (640) prévue de manière à être opposée à un chemin de déplacement de chaque deuxième élément de réception, la deuxième unité de détection d'élément de réception détectant chaque deuxième élément de réception ;
une deuxième unité de détection d'élément de montage (630) prévue de manière à être opposée à un chemin de déplacement de chaque deuxième élément de montage, la deuxième unité de détection d'élément de montage détectant chaque deuxième élément de montage ; et
une deuxième unité de détermination (100) déterminant si les deuxièmes éléments de réception sont montés ou non sur les deuxièmes éléments de montage sur la base d'un résultat de détection délivré par la deuxième unité de détection d'élément de réception et d'un résultat de détection délivré par la deuxième unité de détection d'élément de montage.

3. Dispositif manuel de distribution de médicaments selon la revendication 1, où la première unité de détection d'élément de réception est apte à détecter une position de chaque premier élément de réception dans la première direction de transport et/ou la deuxième direction de transport,
où la première unité de détection d'élément de montage est apte à détecter une position de chaque premier élément de montage dans la première direction de transport, et
où le dispositif manuel de distribution de médicaments comporte une troisième unité de détermination (100) déterminant si les premiers éléments de réception sont correctement montés ou non sur les premiers éléments de montage sur la base du résultat de détection délivré par la première unité de détection d'élément de réception et du résultat de détection délivré par la première unité de détection d'élément de montage.

4. Dispositif manuel de distribution de médicaments selon la revendication 2, où la deuxième unité de détection d'élément de réception est apte à détecter une position de chaque deuxième élément de réception dans la deuxième direction de transport et/ou la première direction de transport,
où la deuxième unité de détection d'élément de montage est apte à détecter une position de chaque deuxième élément de montage dans la deuxième direction de transport, et
où le dispositif manuel de distribution de médicaments comprend une quatrième unité de détermination (100) déterminant si les deuxièmes éléments de réception sont correctement montés ou non sur les deuxièmes éléments de montage sur la base du résultat de détection délivré par la deuxième unité de détection d'élément de réception et du résultat de détection délivré par la deuxième unité de détection d'élément de montage.
